# EUROPÄISCHE PATENTSCHRIFT

(11) **EP 3 344 914 B1**
(45) Veröffentlichungstag und Bekanntmachung des Hinweises auf die Patenterteilung: **15.05.2019**
(21) Anmeldenummer: 16753646.5
(22) Anmeldetag: 16.08.2016
(51) Int. Cl.: F21S 43/14, F21S 43/31, F21S 43/20, B60Q 1/26

(54) **FAHRZEUGLEUCHTE UND VERFAHREN ZUM BEREITSTELLEN EINER LICHTFUNKTION MITTELS EINER FAHRZEUGLEUCHTE**
VEHICLE LIGHT AND METHOD FOR PROVIDING A LIGHT FUNCTION BY MEANS OF A VEHICLE LIGHT
DISPOSITIF D'ÉCLAIRAGE DE VÉHICULE ET PROCÉDÉ DE FOURNITURE D'UNE FONCTION D'ÉCLAIRAGE AU MOYEN D'UN DISPOSITIF D'ÉCLAIRAGE DE VÉHICULE

(30) Priorität: 02.09.2015 DE 102015216746
(43) Veröffentlichungstag der Anmeldung: 11.07.2018
(73) Patentinhaber: Volkswagen Aktiengesellschaft, 38440 Wolfsburg (DE)
(72) Erfinder: STUDENY, Christian, 38104 Braunschweig (DE); MÜLLER, Michael, 38518 Gifhorn (DE)
(86) Internationale Anmeldenummer: PCT/EP2016/069405
(87) Internationale Veröffentlichungsnummer: WO 2017/036787

(56) Entgegenhaltungen:
- WO-A1-2016/041675
- WO-A2-2014/105408
- DE-A1- 10 101 795
- DE-A1-102005 033 684
- DE-A1-102008 057 538
- DE-A1-102012 019 941
- US-A1- 2004 136 196
- US-A1- 2014 056 008

## Beschreibung

Die vorliegende Erfindung betrifft eine Fahrzeugleuchte mit den Merkmalen vom Oberbegriff des Patentanspruchs 1. Sie betrifft auch ein Verfahren zum Bereitstellen einer Lichtfunktion mittels einer Fahrzeugleuchte.

Eine derartige Fahrzeugleuchte ist aus der DE 10 2012 005 826 A1 bekannt. Konkret weist das Optikelement eine Lichteinkoppelfläche zum Einkoppeln der Lichtemission einer Lichtquelle und eine Auskoppelstruktur auf, bei welcher die Richtungen der eingekoppelten Lichtstrahlen so verändert werden, dass eine Abstrahlcharakteristik erzeugt wird, die sich von der Abstrahlcharakteristik der Lichtemission der Lichtquelle der Fahrzeugleuchte unterscheidet. Die Auskoppelstruktur umfasst eine Vielzahl von Facettenflächen, bei denen Lichtstrahlen in einem Abstrahlwinkel ausgekoppelt werden, der von der jeweiligen Winkelausrichtung der Facettenfläche abhängt. Die Facettenflächen sind in unterschiedlichen Winkeln zueinander in einem sich nicht wiederholenden Muster angeordnet. Durch die Gestaltung der Facettenflächen der Auskoppelstruktur wird mittels des Optikelements ein Glitzereffekt erzeugt, bei dem der Betrachter bei variierenden Betrachtungspositionen und Betrachtungswinkeln keine gleichmäßig leuchtende Fläche wahrnimmt.

In der DE 10 2012 019 941 A1 ist eine Fahrzeugleuchte beschrieben, bei der zwei Reflektoren bezüglich einer Lichtabstrahlrichtung der Fahrzeugleuchte hintereinander angeordnet sind. Vor jedem Reflektor ist eine dem jeweiligen Reflektor zugeordnete Lichtquelle angeordnet. Der vordere Reflektor ist als halbdurchlässiger Spiegel ausgebildet. So können Lichtstrahlen, die von der dem hinteren Reflektor zugeordneten Lichtquelle auf den hinteren Reflektor geworfen und zurück auf den vorderen Reflektor reflektiert werden, den vorderen Reflektor durchdringen und somit auch zu einer gewünschten Lichtverteilung einer bestimmten Lichtfunktion (z.B. Schlusslicht) beitragen. Durch den vorderen Reflektor und die diesem zugeordnete Lichtquelle kann eine weitere Lichtfunktion (z.B. Bremslicht) erzeugt werden. In der Patentanmeldung DE-A1-102008057538 wird eine Fahrzeugleuchte mit einem Reflektor und zwei Lichtquellen beschrieben zur Ausführung von verschiedenen Lichtfunktionen. Die frühere Patentanmeldung WO-A1-2016041675 gehört zum Stand der Technik nach Art. 54(3) EPÜ und offenbart eine Fahrzeugleuchte mit mehreren Lichtquellen und mit einem Optikelement mit einer Vielzahl von Facettenflächen.

Schließlich wird in der DE 10 2010 050 955 A1 eine Fahrzeugleuchte offenbart, bei der zwei, jeweils eine Lichtfunktion erzeugende Lichteinheiten in einer Lichtabstrahlrichtung der Fahrzeugleuchte hintereinander angeordnet sind. Zwischen den Lichteinheiten ist eine die erste Lichteinheit abdeckende, teildurchlässige Spiegelfläche in Form einer Zwischenlichtscheibe angeordnet. Hierdurch sollen mehrere Lichtfunktionen platzsparend, einfach und kostengünstig in einem Leuchtengehäuse bereitstellbar sein. Zudem kann auf diese Weise die hintere Lichteinheit im ausgeschalteten Zustand derselben durch die teildurchlässige Spiegelfläche verdeckt und das optische Erscheinungsbild der Fahrzeugleuchte verbessert werden.

Fahrzeugleuchten tragen in zunehmendem Maße zum Design des Fahrzeugs bei. Durch die Gestaltung der Fahrzeugleuchte soll dem Fahrzeug insbesondere ein charakteristisches Erscheinungsbild verliehen werden, welches leicht wiedererkannt wird und durch welches sich das Fahrzeug von dem Design anderer Fahrzeuge unterscheidet.

Der vorliegenden Erfindung liegt daher die Aufgabe zugrunde, eine Fahrzeugleuchte bereitzustellen, mit der auf einfache Weise mehrere Lichtfunktionen erzeugbar sind und welche im Betrieb ein besonders charakteristisches Erscheinungsbild aufweist.

Erfindungsgemäß wird diese Aufgabe durch eine Fahrzeugleuchte mit den Merkmalen des Anspruchs 1 gelöst. Vorteilhafte Ausgestaltungen und Weiterbildungen ergeben sich aus den abhängigen Ansprüchen.

Die Erfindung geht aus von einer Fahrzeugleuchte mit wenigstens einem Optikelement, welches eine Vielzahl von Facettenflächen umfasst, wobei die Richtungen von Lichtstrahlen, welche in Richtung des Optikelementes emittierbar sind, durch die Facettenflächen veränderbar sind.

Die Erfindung schlägt vor, dass dem Optikelement mehrere Lichtquellen zugeordnet sind, wobei die Lichtquellen derart ansteuerbar und relativ zu den Positionen und/oder Ausrichtungen der Facettenflächen angeordnet sind, dass von den Lichtquellen emittierte Lichtstrahlen am Optikelement reflektiert werden und in einer bestimmten Betrachtungsposition wenigstens eine Lichtfunktion mit einem wahrnehmbaren Funkeln erzeugbar ist. Dabei ist das Optikelement transparent ausgebildet und es ist wenigstens eine weitere Lichtquelle auf einer der Betrachtungsposition abgewandten Seite des Optikelementes vorhanden, durch welche durch das Optikelement in Richtung der Betrachtungsposition hindurchtretende Lichtstrahlen zur Realisierung wenigstens einer zweiten Lichtfunktion emittierbar sind.

Auf diese Weise ist die Schaffung einer Fahrzeugleuchte möglich, welche im Betrieb ein außergewöhnliches Erscheinungsbild aufweist und mit der auf einfache Weise mehrere Lichtfunktionen erzeugbar sind.

Wenn die Fahrzeugleuchte beispielsweise als Heckleuchte ausgebildet ist, so ist zum Beispiel denkbar, dass durch die am Optikelement reflektierten Lichtstrahlen die Lichtfunktion eines Schlusslichtes mit einem Funkeleffekt realisiert wird, während die durch das Optikelement hindurchtretenden Lichtstrahlen der wenigstens einen weiteren Lichtquelle die Lichtfunktion eines Bremslichtes, eines Rückfahrlichts, eines Nebelschlusslichts und/oder eines Fahrtrichtungsanzeigers realisieren können.

Ist die Fahrzeugleuchte beispielsweise als Scheinwerfer ausgebildet ist, so ist es zum Beispiel möglich, dass durch die am Optikelement reflektierten Lichtstrahlen die Lichtfunktion eines Abblendlichtes mit einem Funkeleffekt realisiert wird, während die durch das Optikelement hindurchtretenden Lichtstrahlen der wenigstens einen weiteren Lichtquelle die Lichtfunktion eines Fernlichts, eines Fahrtrichtungsanzeigers, eines Nebellichts und/oder auch eines Tagfahrlichts realisieren können.

Gemäß einer ersten Weiterbildung der Erfindung wird vorgeschlagen, dass die Lichtquellen, deren Lichtstrahlen am Optikelement reflektiert werden, eine erste Ausrichtung und die wenigstens eine weitere Lichtquelle, deren Lichtstrahlen durch das Optikelement hindurchtreten, eine zweite Ausrichtung aufweisen, wobei die erste Ausrichtung in etwa senkrecht, vorzugsweise senkrecht zur zweiten Ausrichtung ausgerichtet ist. Dabei sind die erste Ausrichtung in etwa senkrecht zu einer Fahrtrichtung und die zweite Ausrichtung in etwa parallel zur Fahrtrichtung ausgerichtet.

Diese Merkmale tragen zu einem kompakten Aufbau der Fahrzeugleuchte bei. Bei einer vorzugsweisen Ausbildung der Lichtquellen als Leuchtdioden wird die Ausrichtung einer Leuchtdiode durch eine Flächennormale auf die Fläche einer Platine definiert, auf die die Leuchtdiode montiert ist.

Es ist dabei gemäß einer anderen Ausbildung des Erfindungsgedankens sehr vorteilhaft, wenn die Lichtquellen, deren Lichtstrahlen am Optikelement reflektiert werden, oberhalb des Optikelementes angeordnet sind. Hierdurch kann die Sichtbarkeit der Lichtquellen erschwert und das Erscheinungsbild der Fahrzeugleuchte weiter verbessert werden.

Gemäß einer anderen Weiterbildung ist das Optikelement ein zusammenhängender Reflektor mit einer Reflektorfläche, auf der die Facettenflächen angeordnet sind.

Diese Ausgestaltung hat den Vorteil, dass das Optikelement kostengünstig hergestellt werden kann und außerdem einen geringen Bauraumbedarf hat. Schließlich wird hierdurch vorteilhafterweise erreicht, dass die Facettenflächen sehr einfach mittels des Optikelements montierbar sind.

Gemäß einer Weiterbildung der erfindungsgemäßen Fahrzeugleuchte umfasst ein Querschnitt des Reflektors eine von der Reflektorfläche gebildete parabolische Linie. Die Reflektorfläche ist in diesem Fall durch ein Verschieben der parabolischen Linie auf einer Geraden gebildet. In einer Richtung ist der Querschnitt des Reflektors somit bei allen Positionen gleich der parabolischen Linie. Unter einer parabolischen Linie wird eine Linie verstanden, die auf einer Parabel liegt. Zwar liegen die reflektierenden Facettenflächen nicht auf der parabolischen Linie. Wenn jedoch über einen Abschnitt des Reflektors eine Mittelung durchgeführt wird, welche den unstetigen Verlauf der benachbarten Facettenflächen glättet, ergibt sich die Reflektorfläche des Reflektors, welche im Querschnitt auf einer parabolischen Linie liegt. Vorteilhaft an dieser rinnenartigen Ausgestaltung der Reflektorfläche ist, dass ein sehr charakteristisches Erscheinungsbild der Fahrzeugleuchte mit einer speziellen Signatur erreicht wird.

Die Lichtquellen, deren Lichtstrahlen am Optikelement reflektiert werden, können bevorzugt in der Brennlinie der Reflektorfläche angeordnet sein. Jeder Querschnitt des Reflektors, bei dem eine von der Reflektorfläche parabolische Linie entsteht, besitzt einen Brennpunkt. Wenn nun benachbarte parallele Querschnitte betrachtet werden, ergibt sich eine Brennlinie der Reflektorfläche. Durch diese Anordnung der Lichtquellen wird vorteilhafterweise erreicht, dass sehr einfach nahezu parallele Lichtstrahlen durch die Facettenflächen erzeugt werden können. Außerdem vereinfacht diese Anordnung der Lichtquellen die Ausrichtung der Facettenflächen relativ zu den Lichtquellen, um eine gewünschte Abstrahlcharakteristik der Fahrzeugleuchte zu erzeugen.

Die Reflektorfläche, auf welcher die Facettenflächen angeordnet sind, kann auch eine andere geometrische Form aufweisen. Sie kann beispielsweise konkav gewölbt sein. In diesem Fall können die Lichtquellen auch auf andere Weise relativ zu der Reflektorfläche angeordnet sein. Sie können beispielsweise auf einer gekrümmten Linie angeordnet sein, beispielsweise auf einer parabolischen oder kreisförmigen Linie. Auch in diesem Fall sind die Positionen und die Ausrichtungen der Facettenflächen relativ zu den Positionen der Lichtquellen so angeordnet, dass die vorstehend genannten Bedingungen erfüllt sind, um einen Funkeleffekt zu erzeugen, wenn die Lichtemissionen der Lichtquellen aufeinanderfolgend verändert werden.

Bei den Lichtquellen handelt es sich insbesondere um lichtemittierende Dioden (Leuchtdioden). Lichtemittierende Dioden haben den Vorteil, dass sie eine sehr lange Lebensdauer aufweisen und außerdem sehr punktförmige Lichtquellen darstellen.

Die erfindungsgemäße Fahrzeugleuchte besitzt für die Lichtquellen, deren Lichtstrahlen am Optikelement reflektiert werden, insbesondere mehr als drei lichtemittierende Dioden. Die Anzahl der lichtemittierenden Dioden bzw. der Lichtquellen liegt insbesondere in einem Bereich von 5 bis 100 Lichtquellen, bevorzugt in einem Bereich von 10 bis 20 Lichtquellen. Hierdurch wird der Funkeleffekt vorteilhafterweise verstärkt. Die Lichtquellen können separat voneinander angeordnet sein. Sie können jedoch auch in einer Gesamtlichtquelle integriert sein, bei der jedoch die Lichtemissionen von verschiedenen, ggf. sehr nah beieinanderliegenden Positionen erfolgen. Bei der Gesamtlichtquelle kann es sich beispielsweise um einen Halbleiterchip mit mehreren lichtemittierenden Dioden handeln.

Die Erfindung kann so weitergebildet werden, dass die Reflektorfläche wenigstens einen Flächenbereich aufweist, in denen keine Facettenflächen vorhanden sind. Dies kann bedeuten, dass in diesem Flächenbereich keinerlei Optik (also eine glatte, transparente Reflektorfläche) oder eine alternative, von den Facettenflächen abweichende Optik vorhanden ist.

In einem solchen Bereich ist also bewusst kein Funkeleffekt erzielbar. Vielmehr wird auf diese Weise die Realisierung einer bestimmten Lichtverteilung, die zur Bildung einer bestimmten (weiteren) Lichtfunktion beitragen kann, begünstigt.

Hierbei ist es einer Erhöhung der Lichtausbeute bzw. der Effizienz bei der Realisierung der weiteren Lichtfunktion zuträglich, wenn zwischen der wenigstens einen weiteren Lichtquelle und dem Reflektor wenigstens ein weiteres, lichtlenkendes Bauteil angeordnet ist. Dies erfolgt derart, dass von der wenigstens einen weiteren Lichtquelle emittierte Lichtstrahlen vor Durchdringen des Reflektors durch das lichtlenkende Bauteil gelangen können. Das lichtlenkende Bauteil kann insbesondere als refraktives oder reflektierendes Bauteil ausgebildet sein. Beispielsweise kann ein solches Bauteil als Kollimator ausgebildet sein, welcher möglichst viel von den Lichtstrahlen der wenigstens einen weiteren Lichtquelle "einsammelt", bevor die Lichtstrahlen weiter zum Reflektor gelangen. Aber auch die Ausbildung als Lichtleiter ist denkbar. Kombinationen dieser Eigenschaften sind denkbar.

Das wenigstens eine weitere, lichtlenkende Bauteil kann gemäß einer anderen Weiterbildung einteilig mit dem Reflektor verbunden sein. Mit anderen Worten sind das Bauteil und der Reflektor zusammen als ein Teil hergestellt und stoffschlüssig miteinander verbunden. Die Herstellung kann beispielsweise im Spritzgussverfahren erfolgen. Auf diese Weise ist die Einsparung von Bauteilen möglich und der Montageaufwand der Fahrzeugleuchte kann reduziert werden.

Es schlägt eine andere Ausbildung der Erfindung vor, dass auf die Reflektorfläche des Optikelementes zumindest bereichsweise eine Metallschicht aufgebracht ist, die in der Dicke derart bemessen ist, dass Lichtstrahlen der wenigstens einen weiteren Lichtquelle die Metallschicht durchdringen können.

Auf diese Weise ist es möglich bei einer Betrachtung der Fahrzeugleuchte aus Richtung der Betrachtungsposition im ausgeschalteten Zustand der Fahrzeugleuchte für die Reflektorfläche einen hochwertig anmutenden Chromeffekt zu erzielen, bei der die wenigstens eine weitere Lichtquelle kaschiert ist. Im eingeschalteten Zustand der Fahrzeugleuchte können jedoch die Lichtstrahlen der wenigstens einen weiteren Lichtquelle das Optikelement durchdringen und somit zur Realisierung einer weiteren Lichtfunktion beitragen.

Schließlich kann nach einer anderen Ausbildung der Erfindung auf die Reflektorfläche zumindest bereichsweise auch eine solche Beschichtung aufgebracht sein, die lediglich Lichtstrahlen einer bestimmten Wellenlänge durchlässt (sogenannte Interferenzbeschichtung).

Hierdurch kann vermieden werden, dass nur solche Lichtstrahlen das Optikelement durchdringen, die von der wenigstens einen weiteren Lichtquelle zur Realisierung einer bestimmten Lichtfunktion emittiert werden. Beispielsweise kann die Beschichtung derart ausgebildet sein, dass diese nur gelbes Licht eines Fahrtrichtungsanzeigers hindurchlässt. Auf diese Weise lässt sich eine solche bestimmte Lichtfunktion optisch noch besser von anderen zu realisierenden Lichtfunktionen trennen.

In diesem Zusammenhang ist auch denkbar, dass der Reflektor bereichsweise mit unterschiedlichen Interferenzbeschichtungen versehen ist, derart, dass ein Bereich nur Licht eines bestimmten Wellenlängenbereichs und ein anderer Bereich nur Licht eines anderen bestimmten Wellenlängenbereichs durchlässt. Dies kann zum Beispiel dann sinnvoll sein, wenn auf der der Betrachtungsposition abgewandten Seite des Optikelementes an unterschiedlichen Positionen Lichtquellen vorhanden sind, die unterschiedliche Lichtfunktionen realisieren sollen. Die Lichtfunktionen können beispielsweise ein Fahrtrichtungsanzeiger und ein Tagfahrlicht oder ein Fahrtrichtungsanzeiger und ein Rückfahrlicht sein.

Im Folgenden wird genauer beschrieben, wie das wahrnehmbare Funkeln einer Lichtfunktion erzeugt werden kann:
Die Positionen und/oder Ausrichtungen der Facettenflächen relativ zu den Positionen der Lichtquellen sind so angeordnet, dass von einer bestimmten, von der Fahrzeugleuchte entfernten Betrachtungsposition aus zumindest ein von einer ersten Lichtquelle emittierter und in seiner Richtung von einer ersten Facettenfläche bei einer ersten Facettenposition veränderter Lichtstrahl sichtbar ist, ein von einer zweiten Lichtquelle emittierter und in seiner Richtung von einer zweiten Facettenfläche bei einer zweiten Facettenposition veränderter Lichtstrahl sichtbar ist und ein von einer dritten Lichtquelle emittierter und in seiner Richtung von einer dritten Facettenfläche bei einer dritten Facettenposition veränderter Lichtstrahl sichtbar ist, wobei die erste, zweite und dritte Facettenposition jeweils beabstandet voneinander angeordnet sind.

Bei der erfindungsgemäßen Fahrzeugleuchte ist somit von einer bestimmten, von der Fahrzeugleuchte entfernten Betrachtungsposition aus zumindest ein von einer ersten Lichtquelle emittierter Lichtstrahl, dessen Richtung von einer ersten Facettenfläche bei einer ersten Facettenposition verändert wurde, sichtbar, ein von einer zweiten Lichtquelle emittierter Lichtstrahl, dessen Richtung von einer zweiten Facettenfläche bei einer zweiten Facettenposition verändert wurde, sichtbar und ein von einer dritten Lichtquelle emittierter Lichtstrahl, dessen Richtung von einer dritten Facettenfläche bei einer dritten Facettenposition verändert wurde, sichtbar. Dabei sind die erste, zweite und dritte Facettenposition jeweils beabstandet voneinander angeordnet.

Bei der erfindungsgemäßen Fahrzeugleuchte sind die Facettenflächen somit insbesondere so angeordnet bzw. ausgerichtet, dass Lichtstrahlen von verschiedenen Lichtquellen über Facettenflächen bei verschiedenen Positionen zu einer bestimmten Betrachtungsposition gelangen können. Diese Geometrie der Facettenflächen relativ zu der Anordnung der Lichtquellen ermöglicht es, Lichtstrahlen von verschiedenen Positionen zu einer bestimmten Betrachtungsposition gelangen zu lassen. Wenn die Lichtquellen nun so angesteuert werden, dass sie nacheinander oder in einer beliebigen Reihenfolge Licht emittieren, ergibt sich vorteilhafterweise ein Funkeleffekt bei der ersten Betrachtungsposition. Ein Betrachter bei dieser Betrachtungsposition nimmt nämlich nacheinander Lichtstrahlen von den verschiedenen Facettenpositionen wahr. Dieser Funkeleffet ergibt sich dabei vorteilhafterweise, ohne dass sich die relative Position des Betrachters zu der Fahrzeugleuchte verändern muss.

Gemäß einer weiteren Ausgestaltung der erfindungsgemäßen Fahrzeugleuchte umfasst das Optikelement mehrere beabstandet voneinander angeordnete Facettenflächen für die gilt, dass von einer bestimmten, von der Fahrzeugleuchte entfernten Betrachtungsposition aus ein von der ersten Lichtquelle emittierter und in seiner Richtung von diesen Facettenflächen veränderter Lichtstrahl sichtbar ist. Das bedeutet, dass ein von der ersten Lichtquelle emittierter Lichtstrahl, dessen Richtung von diesen Facettenflächen verändert wurde, sichtbar ist. Gleichermaßen gibt es mehrere beabstandete Facettenflächen für die gilt, dass von dieser Betrachtungsposition aus ein von der zweiten Lichtquelle emittierter und in seiner Richtung von diesen Facettenflächen veränderter Lichtstrahl sichtbar ist. Des Weiteren gibt es mehrere beabstandete Facettenflächen für die gilt, dass von der Betrachtungsposition aus ein von der dritten Lichtquelle emittierter und in seiner Richtung von diesen Facettenflächen veränderter Lichtstrahl sichtbar ist. Wenn somit beispielsweise die erste Lichtquelle Licht emittiert, sind von der Betrachtungsposition aus Lichtstrahlen von mehreren Facettenflächen gleichzeitig sichtbar. Die Facettenflächen sind jedoch beabstandet voneinander angeordnet. Wenn die zweite Lichtquelle eingeschaltet ist, sind von der Betrachtungsposition aus Lichtstrahlen von mehreren anderen Facettenflächen sichtbar und wenn die dritte Lichtquelle eingeschaltet ist, sind von der Betrachtungsposition aus wiederum mehrere von noch anderen Facettenflächen ausgehende Lichtstrahlen sichtbar. Hierdurch wird vorteilhafterweise der Funkeleffekt noch verstärkt, da ein Betrachter bei dieser Betrachtungsposition Lichtstrahlen gleichzeitig von verschiedenen beabstandeten Facettenpositionen und nacheinander von wiederum anderen beabstandeten Facettenpositionen wahrnimmt.

Gemäß einer Weiterbildung der erfindungsgemäßen Fahrzeugleuchte sind die Positionen und/oder Ausrichtungen der Facettenflächen relativ zu den Positionen der Lichtquellen so angeordnet, dass von der Betrachtungsposition aus ein von der ersten Lichtquelle emittierter und in seiner Richtung von einer zu der ersten Facettenfläche direkt benachbarten Facettenfläche veränderter Lichtstrahl nicht sichtbar ist, ein von der zweiten Lichtquelle emittierter und in seiner Richtung von einer zu der zweiten Facettenfläche direkt benachbarten Facettenfläche veränderter Lichtstrahl nicht sichtbar ist und auch ein von der dritten Lichtquelle emittierter und in seiner Richtung von einer zu der dritten Facettenfläche direkt benachbarten Facettenfläche veränderter Lichtstrahl nicht sichtbar ist. Es ist somit von der Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar, ein von der zweiten Lichtquelle emittierter Lichtstrahl, dessen Lichtquelle von einer zu der zweiten Facettenfläche direkt benachbarten Facettenfläche verändert wurde, nicht sichtbar und auch ein von der dritten Lichtquelle emittierter Lichtstrahl, dessen Richtung von einer zu der dritten Facettenfläche direkt benachbarten Facettenfläche verändert wurde, nicht sichtbar. Wenn somit eine der Lichtquellen leuchtet, gelangt zu der Betrachtungsposition ein von der ersten Facettenfläche ausgehender Lichtstrahl zu dieser Betrachtungsposition, jedoch gelangt ein von benachbarten Facettenflächen ausgehender Lichtstrahl nicht zu dieser Betrachtungsposition. Es wird somit gerade keine homogen leuchtende Fläche bei der Betrachtungsposition durch die Lichtemission einer bestimmten Lichtquelle der Fahrzeugleuchte erzeugt. Hierdurch wird vorteilhafterweise der Funkeleffekt verstärkt.

Des Weiteren können die Positionen und/oder Ausrichtungen der Facettenflächen relativ zu den Positionen der Lichtquellen so angeordnet sein, dass von einer bestimmten, von der Fahrzeugleuchte entfernten zweiten Betrachtungsposition aus, die beabstandet von der vorgenannten Betrachtungsposition ist, zumindest ein von der ersten Lichtquelle emittierter und in seiner Richtung von einer vierten Facettenfläche bei einer vierten Facettenposition veränderter Lichtstrahl sichtbar ist, ein von der zweiten Lichtquelle emittierter und in seiner Richtung von einer fünften Facettenfläche bei einer fünften Facettenposition veränderter Lichtstrahl sichtbar ist, und ein von der dritten Lichtquelle emittierter und in seiner Richtung von einer sechsten Facettenfläche bei einer sechsten Facettenposition veränderter Lichtstrahl sichtbar ist, wobei die erste, zweite, dritte, vierte, fünfte und sechste Facettenposition jeweils beabstandet voneinander angeordnet sind. Die Facettenflächen sind somit so angeordnet und ausgerichtet, dass vorteilhafterweise gleichzeitig bei verschiedenen Betrachtungspositionen ein Funkeleffekt erzeugt werden kann, wenn die Lichtquellen in einer bestimmten Sequenz angesteuert werden, um Licht zu emittieren oder verändert zu emittieren. Vorteilhafterweise kann dieser Funkeleffekt für alle Betrachtungspositionen innerhalb eines bestimmten Raumwinkels von der Fahrzeugleuchte erzeugt werden.

Unter Facettenflächen werden im Sinne der vorliegenden Schrift insbesondere benachbarte Flächen des Optikelements verstanden, welche die Richtung einfallender Lichtstrahlen unterschiedlich verändern. Dabei ist die Veränderung beim Übergang von einer Facettenfläche zu einer anderen Facettenfläche, insbesondere zu einer benachbarten Facettenfläche, unstetig. Die Richtung eines Lichtstrahls wird von benachbarten Facettenflächen somit vollkommen unterschiedlich verändert. Auf einer einzigen Facettenfläche kann es auch zu unterschiedlichen Veränderungen der Richtung eines einfallenden Lichtstrahls kommen. Diese Veränderung ist dann jedoch stetig.

Bei der erfindungsgemäßen Fahrzeugleuchte sind die Facettenflächen reflektierend. Die Facettenflächen sind insbesondere spiegelnd, sodass eine gerichtete Reflektion auftritt, bei welcher der Ausfallswinkel eines reflektierten Lichtstrahls gleich dem Einfallswinkel des einfallenden Lichtstrahls ist. Vorteilhafterweise wird hierdurch erreicht, dass ein Lichtstrahl, welcher von einer bestimmten Lichtquelle emittiert wurde, sehr genau zu einer bestimmten Betrachtungsposition umgelenkt wird.

Die reflektierende, insbesondere spiegelnde Wirkung der Facettenflächen kann durch eine sehr glatte Oberfläche, also eine Oberfläche mit außerordentlich geringer Rauheit erzielt werden. Dies ist durch entsprechende Feinbearbeitung der Facettenflächen, beispielsweise durch Polieren, Schleifen oder Ätzen denkbar, wobei die Aufzählung einer möglichen Oberflächenbearbeitung nicht abschließend ist.

Durch die erwähnte, sehr glatte Oberfläche kann die reflektierende Wirkung der Facettenflächen auch ohne eine spiegelnde Beschichtung (bspw. in Form einer Aluminiumbeschichtung) des ansonsten transparenten Optikelementes erreicht werden.

Die Facettenflächen sind vorzugsweise von ebenen Flächen gebildet. Vorteilhafterweise lassen sich solche Facettenflächen kostengünstig herstellen. Die Normalen benachbarter Facettenflächen sind dabei insbesondere unterschiedlich ausgerichtet. Hierdurch wird auf einfache und kostengünstige Weise die unstetige Veränderung der Richtung der einfallenden Lichtstrahlen und damit der vorstehende Funkeleffekt erreicht.

Die Facettenflächen sind insbesondere über Kanten miteinander verbunden, wobei der Krümmungsradius der Kanten der Facetten möglichst klein ist. Radien auf der Facettenfläche sollten vermieden werden, um die brillante Anmutung des Reflektors zu beeinträchtigen. Gleichermaßen sollte der Radius bei einer Kante, die von benachbarten Facettenflächen gebildet ist, so klein wie möglich sein. Auch durch diese Ausgestaltung wird der Funkeleffekt verstärkt.

Die Facettenflächen sind insbesondere von einer Kombination aus rechteckigen und/oder dreieckigen Flächen gebildet. Es können somit sowohl rechteckige als auch dreieckige Flächen sowie nur rechteckige oder nur dreieckige Flächen umfasst sein, die ggf. unterschiedliche Größen aufweisen. Die Wahl der Geometrie der Facettenflächen richtet sich nach der Geometrie der Reflektorfläche, auf welcher die Facettenflächen gebildet sind. Es sollte hier eine möglichst effiziente Reflektion erzielt werden, wobei Beschränkungen durch das Herstellungsverfahren der Facettenflächen und Beschränkungen, die sich durch die Größe der Facettenflächen ergeben, zu berücksichtigen sind. Diese Gestaltung der Facettenflächen ermöglicht es somit, die Geometrie des Reflektors sehr flexibel zu gestalten und eine effiziente Reflexion zu erzielen.

Gemäß einer Weiterbildung der erfindungsgemäßen Fahrzeugleuchte umfasst diese eine Steuereinheit mit einem Zufallsgenerator. Mit diesem Zufallsgenerator ist bzw. sind aufeinanderfolgend eine oder mehrere Lichtquelle(n) zufällig auswählbar, deren Lichtemission für ein kurzes Zeitintervall veränderbar ist. Die Lichtemission der ausgewählten Lichtquelle(n) kann insbesondere kurzzeitig erhöht werden. Durch den Zufallsgenerator kann vorteilhafterweise erreicht werden, dass das bei der Fahrzeugleuchte wahrnehmbare Funkeln natürlichen Funkelphänomenen angenähert wird.

Gemäß einer anderen Ausgestaltung der erfindungsgemäßen Fahrzeugleuchte umfasst die Steuereinheit einen Speicher, in dem ein Muster gespeichert ist, welches eine aufeinanderfolgende Auswahl von Lichtquellen bestimmt, deren Lichtemission für ein kurzes Zeitintervall veränderbar ist. Auch in diesem Fall wird die Lichtemission der ausgewählten Lichtquelle(n) insbesondere kurzzeitig erhöht. Durch das im Voraus gespeicherte Muster für die Ansteuerung der Lichtquellen kann vorteilhafterweise die Charakteristik des Funkeleffekt im Voraus exakt festgelegt werden.

Durch den Zufallsgenerator oder durch das in dem Speicher gespeicherte Muster sind die Lichtquellen insbesondere so ansteuerbar, dass bei einer Betrachtungsposition ein Funkeleffekt erzeugt wird, bei dem nacheinander eine oder mehrere Facettenflächen bei verschiedenen Positionen aufgrund von reflektierten Lichtstrahlen aufblitzen.

Mit der Erfindung soll auch ein Verfahren zum Bereitstellen einer Lichtfunktion mittels einer erfindungsgemäßen Fahrzeugleuchte bereitgestellt werden. Diese Aufgabe wird mit dem Verfahrensanspruch 12 gelöst. Vorteilhafte Ausgestaltungen des Verfahrens sind einem Unteranspruch zu entnehmen.

Es soll nun das Verfahren zum Bereitstellen einer Lichtfunktion mittels einer erfindungsgemäßen Fahrzeugleuchte beschrieben werden. Dabei weist die Fahrzeugleuchte zumindest drei bei verschiedenen Positionen angeordnete Lichtquellen und ein Optikelement auf, das eine Vielzahl von Facettenflächen umfasst, wobei die Richtungen von Lichtstrahlen, die von den Lichtquellen emittiert wurden und die auf die Facettenflächen treffen, durch die Facettenflächen verändert werden. Bei der Fahrzeugleuchte handelt es sich insbesondere um die vorstehend beschriebene Fahrzeugleuchte.

Bei dem Verfahren wird eine Sequenz von Lichtquellen ausgewählt, deren Lichtemission aufeinander folgend kurzzeitig verändert wird. Die Lichtemission der Lichtquellen wird sequenziell so verändert, dass von einer bestimmten, von der Fahrzeugleuchte entfernten Betrachtungsposition aus zumindest zunächst ein von einer ersten Lichtquelle emittierter Lichtstrahl, dessen Richtung von einer ersten Facettenfläche bei einer ersten Facettenposition verändert wurde, kurzzeitig sichtbar ist, danach ein von einer zweiten Lichtquelle emittierter Lichtstrahl, dessen Richtung von einer zweiten Facettenfläche bei einer zweiten Facettenposition verändert wurde, kurzzeitig sichtbar ist und anschließend ein von einer dritten Lichtquelle emittierter Lichtstrahl, dessen Richtung von einer dritten Facettenfläche bei einer dritten Facettenposition verändert wurde, kurzzeitig sichtbar ist. Die erste, zweite und dritte Facettenposition sind dabei jeweils beabstandet voneinander angeordnet.

Durch die sequenzielle Ansteuerung der Lichtquellen sowie die Geometrie der Fahrzeugleuchte ergibt sich vorteilhafterweise ein Funkeleffekt, ohne dass sich die relative Position des Betrachters zu der Fahrzeugleuchte verändern muss. Hierdurch wird der Fahrzeugleuchte ein besonders charakteristisches Erscheinungsbild verliehen. Außerdem nimmt der Betrachter eine Lichtfunktion, die von dem erfindungsgemäßen Verfahren bereitgestellt wird, aufgrund des Funkeleffekts besonders leicht und verlässlich wahr.

Bei dem Verfahren werden die Lichtquellen insbesondere so angesteuert, dass von der ersten Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar ist. Auch die Lichtstrahlen von der zweiten bzw. dritten Lichtquelle, deren Richtungen von zu der zweiten bzw. dritten Facettenfläche benachbarten Facettenfläche verändert wurden, sind von der ersten Betrachtungsposition aus nicht sichtbar. Hierdurch wird vorteilhafterweise erreicht, dass für den Betrachter von der ersten Betrachtungsposition aus Lichtimpulse von verschiedenen beabstandeten, d.h. nicht benachbarten, Positionen aus kurzzeitig aufblitzen. Dieser Funkeleffekt wird insbesondere für eine Vielzahl von Betrachtungspositionen innerhalb eines bestimmten Raumwinkels erzeugt.

Bei der Sequenz kann die Lichtemission der ausgewählten Lichtquelle bevorzugt von einem ersten Zustand in einen zweiten Zustand versetzt werden. Bei dem ersten Zustand kann die Lichtquelle z. B. kein Licht emittieren oder Licht mit eine geringeren Intensität emittieren. In dem zweiten Zustand wird die ausgewählte Lichtquelle dann so angesteuert, dass sie Licht mit einer höheren Lichtintensität emittiert. Die geringere Lichtintensität des ersten Zustands kann beispielsweise in einem Bereich von 0 bis 50 % der Lichtintensität des zweiten Zustands sein. Vorteilhafterweise können mittels der beiden Zustände der Lichtemission der Lichtquellen verschiedene Lichtfunktionen der Fahrzeugleuchte realisiert werden, wobei zumindest bei einer Lichtfunktion der vorstehend beschriebene Funkeleffekt auftritt.

Es wird bei der Sequenz zunächst eine echte Teilmenge der Lichtquellen ausgewählt. Die Lichtemission dieser Teilmenge wird dann für ein definiertes Zeitintervall verändert, beispielsweise von dem ersten Zustand in den zweiten Zustand versetzt. Danach wird eine andere Teilmenge der Lichtquellen ausgewählt. Diese Teilmenge unterscheidet sich von der zuvor ausgewählten Teilmenge. Es ist jedoch möglich, dass Lichtquellen in der Schnittmenge der beiden Teilmengen enthalten sind. Alternativ wird ausgeschlossen, dass es eine Schnittmenge gibt. In diesem Fall unterscheiden sich die Teilmengen somit vollständig. Für diese zweite Teilmenge wird dann die Lichtemission für das definierte Zeitintervall verändert. Zwischen den aufeinanderfolgenden Zeitintervallen kann es ein Zwischenzeitintervall geben, in welchem die Lichtemission keiner Lichtquelle verändert wird. Ferner können die beiden Zeitintervalle direkt aufeinanderfolgend sein. Schließlich ist es auch möglich, dass die Zeitintervalle überlappen. Alle diese Ausgestaltungen sind separat von der Erfindung in Verbindung mit den verschiedenartigen Gestaltungen des Optikelements umfasst. Anschließend wird erneut eine dritte Teilmenge der Lichtquellen ausgewählt. Das Verhältnis dieser dritten Teilmenge zu der zweiten Teilmenge kann dasselbe sein, wie das Verhältnis der ersten Teilmenge zu der zweiten Teilmenge. Für das Verhältnis der ersten Teilmenge zu der dritten Teilmenge kann festgelegt sein, dass die dritte Teilmenge nicht identisch mit der ersten Teilmenge sein darf, dass jedoch die Schnittmenge zwischen der dritten Teilmenge und der ersten Teilmenge eine echte Unterteilmenge der ersten und der dritten Teilmenge enthalten darf. Alternativ kann festgelegt sein, wieviel definierte Zeitintervalle zwischen einer erneuten Veränderung der Lichtemission einer bestimmten Lichtquelle liegen müssen. Hierdurch wird dann die Mindestlänge, z.B. des ersten Zustands der Lichtquellen, festgelegt.

Ferner wird durch das erfindungsgemäße Verfahren der beschriebenen Lichtfunktion mit einem wahrnehmbaren Funkeln wenigstens eine weitere Lichtfunktion überlagert, indem wenigstens eine weitere Lichtquelle angesteuert wird, welche an der der Betrachtungsposition abgewandten Seite des Reflektors angeordnet ist. Dadurch werden Lichtstrahlen emittiert, die durch den transparenten Reflektor gelangen und diesen auf der der Betrachtungsposition zugewandten Seite des Reflektors in Richtung der Betrachtungsposition wieder verlassen.

Die Auswahl der Lichtquellen wird vorteilhaft zufällig ausgewählt. Hierfür kann ein Zufallsgenerator verwendet werden. Die zufällige Auswahl der Lichtquellen kann jedoch durch die vorgenannten Nebenbedingungen eingeschränkt werden. Hierdurch wird vorteilhafterweise sichergestellt, dass ein besonders charakteristischer und realitätsnaher Funkeleffekt erzeugt wird.

Gemäß einer anderen Ausgestaltung des Verfahrens ist die Auswahl der Lichtquellen in der Sequenz vorab in einem bestimmten Muster gespeichert. In diesem Fall wird vorteilhafterweise die Charakteristik des Funkeleffekt im Voraus exakt festgelegt.

Die Lichtintensität der ausgewählten Lichtquelle wird insbesondere kurzzeitig erhöht. Dies führt bei dem Funkeleffekt vorteilhafterweise zu einem Aufblitzen von Lichtpulsen.

Mit der Erfindung soll auch ein Kraftfahrzeug unter Schutz gestellt werden, das mit wenigstens einer erfindungsgemäßen Fahrzeugleuchte ausgestattet ist.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: den grundsätzlichen Aufbau eines Ausführungsbeispiels der erfindungsgemäßen Fahrzeugleuchte,
- Fig. 2: perspektivisch ein Beispiel für die Form eines Reflektors des Ausführungsbeispiels der Fahrzeugleuchte gemäß der vorliegenden Erfindung,
- Fig. 3: eine Detailansicht eines Beispiels einer Reflektorfläche, wie sie bei einem Ausführungsbeispiel der vorliegenden Erfindung eingesetzt wird,
- Fig. 4: ein weiteres Detail mit den Facettenflächen des in Figur 3 gezeigten Reflektors,
- Fig. 5: eine Darstellung zur Erläuterung der Position und Ausrichtung der Facettenflächen relativ zu den Positionen der Lichtquellen des Ausführungsbeispiels der erfindungsgemäßen Fahrzeugleuchte,
- Fig. 6: perspektivisch ein weiteres Ausführungsbeispiel der Erfindung,
- Fig. 7: Eine Darstellung gemäß Ansicht VII aus Fig. 6,
- Fig. 8: noch ein weiteres Ausführungsbeispiel der Erfindung,
- Fig. 9: noch ein weiteres Ausführungsbeispiel der Erfindung und
- Fig. 10: ein Kraftfahrzeug mit erfindungsgemäßen Fahrzeugleuchten.

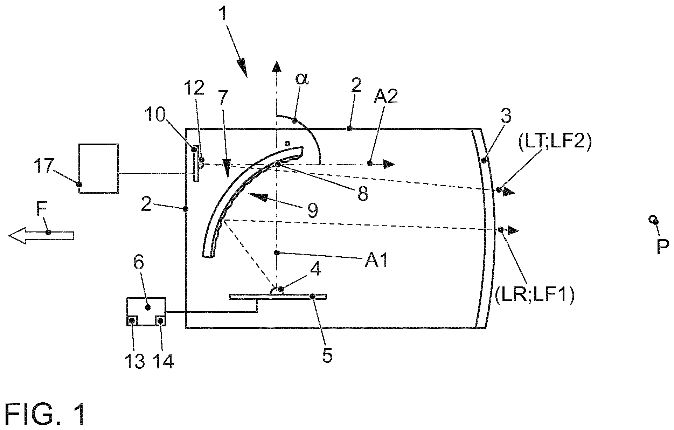

Der grundsätzliche Aufbau der Fahrzeugleuchte 1 wird mit Bezug zu Figur 1 erläutert:
Die Fahrzeugleuchte 1 ist in einem Gehäuse 2 untergebracht, welches in der Lichtemissionsrichtung der Fahrzeugleuchte 1 von einer transparenten Außenlichtscheibe 3 abgeschlossen ist. Die Fahrzeugleuchte 1 umfasst zumindest drei Lichtquellen 4, die auf einer Platine 5 angeordnet sind und mittels einer Steuereinheit 6 ansteuerbar sind bzw. angesteuert werden. Die Lichtquellen 4 sind bei verschiedenen Positionen angeordnet, wie es später im Detail erläutert wird. Bei den Lichtquellen 4 handelt es sich insbesondere um Leuchtdioden. In Lichtemissionsrichtung der Lichtquellen 4 ist ein Optikelement 7 angeordnet. Im vorliegenden Ausführungsbeispiel ist das Optikelement 7 ein Reflektor 7, insbesondere ein zusammenhängender Reflektor 7. Dieser Reflektor 7 weist eine Reflektorfläche 8 auf, welche den Lichtquellen 4 zugewandt ist, sodass von den Lichtquellen 4 emittierte Lichtstrahlen auf die Reflektorfläche 8 treffen und als reflektierte Lichtstrahlen LR durch die Außenlichtscheibe 3 nach außen zu einer Betrachtungsposition P gelangen können. Die Lichtstrahlen LR (es ist beispielhaft und schematisch nur ein Lichtstrahl gezeichnet) können eine erste Lichtfunktion LF1, bspw. ein Schlusslicht ausbilden.

Die Reflektorfläche 8 weist zwar eine bestimmte geometrische Form auf. Bei dieser grundsätzlichen Form der Reflektorfläche 8 ist jedoch eine bestimmte Mikrostruktur vorgesehen. Die Reflektorfläche 8 umfasst eine Vielzahl von Facettenflächen 9. Die Position und Ausrichtung der Facettenflächen 9 zur Erreichung einer gewünschten Lichtverteilung einer Lichtfunktion kann berechnet werden. Die von den Lichtquellen 4 emittierten Lichtstrahlen werden somit an den Facettenflächen 9 der Reflektorfläche 8 reflektiert, sodass die von den Lichtquellen 4 emittierten Lichtstrahlen in ihrer Richtung verändert werden. Die Richtung des an einer Facettenfläche 9 reflektierten Lichtstrahls wird dabei durch die Position und Ausrichtung der Facettenfläche 9 relativ zu der Position der jeweiligen Lichtquelle 4 bestimmt.

Der Reflektor 7 ist transparent. Er ist vorzugsweise glasklar, das heißt nicht eingefärbt. Eine Reflektion der von den Lichtstrahlen 4 emittierten Lichtstrahlen an den Facettenflächen 9 ist dennoch möglich, da diese eine sehr glatte Oberfläche, also eine Oberfläche mit außerordentlich geringer Rauheit aufweisen. Dies ist durch entsprechende Feinbearbeitung der Facettenflächen, beispielsweise durch Polieren, Schleifen oder Ätzen denkbar, wobei die Aufzählung einer möglichen Oberflächenbearbeitung nicht abschließend ist.

Durch die erwähnte, sehr glatte Oberfläche kann die reflektierende Wirkung der Facettenflächen auch ohne eine spiegelnde Beschichtung (bspw. in Form einer Aluminiumbeschichtung) des ansonsten transparenten Reflektors 7 erreicht werden.

Hinter dem Reflektor 7, also auf einer Seite des Reflektors 7, die der Betrachtungsposition P abgewandt ist, sind eine oder mehrere weitere Lichtquellen 12 auf einer ggf. gemeinsamen Platine 10 angeordnet. Die Lichtquellen 12 sind durch eine weitere Steuereinheit 17 ansteuerbar. Von den Lichtquellen 12 emittierbare Lichtstrahlen können aufgrund der Transparenz des Reflektors 7 diesen durchdringen und als durchgelassene Lichtstrahlen LT (auch hier beispielhaft nur ein Lichtstrahl gezeichnet) zur Betrachtungsposition P gelangen. Auf diese Weise kann leicht eine weitere Lichtfunktion LF2, bspw. ein Bremslicht realisiert werden.

Ferner ist ersichtlich, dass die Lichtquellen 4 eine Ausrichtung A1 und die Lichtquellen 12 eine Ausrichtung A2 aufweisen. Die Ausrichtungen A1, A2 sind jeweils durch die Flächennormale zur Flächenerstreckung einer Platine 5 bzw. 10 definiert, auf der die Lichtquellen 4 und 12 jeweils montiert sind. Die Ausrichtungen A1 und A2 stehen in einem Winkel α in etwa senkrecht, vorzugsweise senkrecht zueinander. Zudem steht in Montageposition der Fahrzeugleuchte 1 die Ausrichtung A1 in etwa senkrecht zu einer Fahrtrichtung F und die Ausrichtung A2 in etwa parallel zur Fahrtrichtung F.

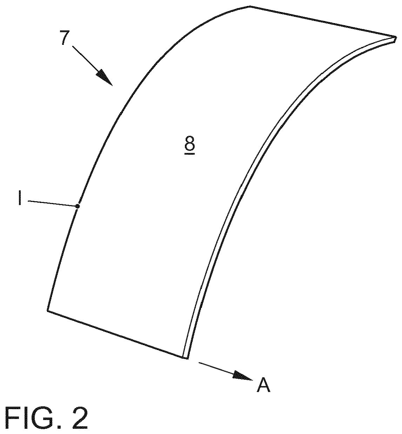

In Figur 2 ist perspektivisch die grundsätzliche Form des Reflektors 7 mit der Reflektorfläche 8 gezeigt. Im Querschnitt liegt die Reflektorfläche 8 des Reflektors 7 auf einer parabolischen Linie I. Die Reflektorfläche 8 ist dann durch ein Verschieben dieser parabolischen Linie I auf einer Geraden gebildet, die in Richtung des Pfeils A verläuft. Bei einem Querschnitt, der senkrecht auf dieser Richtung A steht, ist die Form der Reflektorfläche 8 somit jeweils von einer parabolischen Linie I gebildet. Der Reflektor 7 weist somit die Form einer Rinne auf, die im Querschnitt parabolisch ist. Zu jeder parabolischen Linie I eines Querschnitts gibt es einen Brennpunkt. In Richtung A entsteht somit eine Brennlinie für den Reflektor 7. Die Lichtquellen 4 sind bei dem vorliegenden Ausführungsbeispiel auf dieser Brennlinie angeordnet. Die von den Lichtquellen 4 emittierten Lichtstrahlen erreichen dabei alle Facettenflächen 9 der Reflektorfläche 8. Die Richtung, in welche diese Lichtstrahlen dann reflektiert werden, hängt von der relativen Position und Ausrichtung der Facettenfläche 9 zu der Position der Lichtquelle 4 ab, welche den Lichtstrahl emittiert hat.

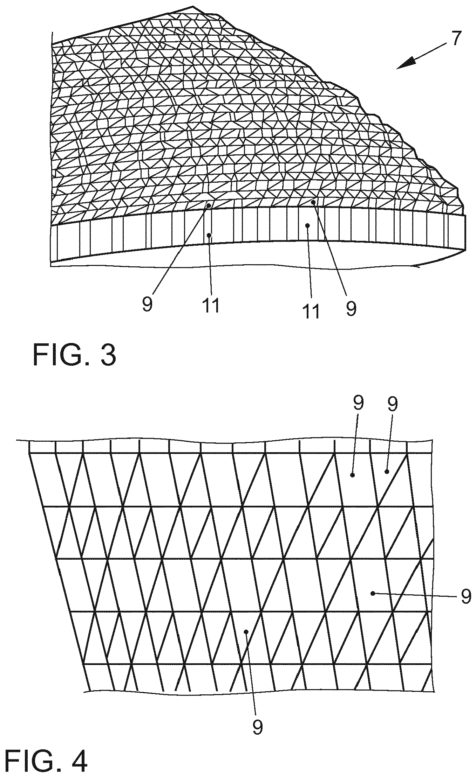

In Figur 3 ist eine Detailansicht des Reflektors 7 gezeigt. Der Reflektor 7 setzt sich dabei aus Segmenten 11 zusammen, welche auf ihrer Oberfläche bei der Reflektorfläche 8 die Facettenflächen 9 bilden.

In Figur 4 sind die Facettenflächen 9 im Detail gezeigt. Sie umfassen viereckige und dreieckige Flächen. Insbesondere wird eine Kombination aus rechteckigen und dreieckigen Flächen gewählt. Die Facettenflächen 9 sind plan, sie weisen keine Krümmung auf, d. h. es handelt sich um ebene Flächen. Zwischen benachbarten Facettenflächen 9 sind Kanten gebildet, die einen möglichst kleinen Radius aufweisen. Die Ausrichtung der Normalen auf einer Facettenfläche 9 unterscheidet sich zu der Ausrichtung der Normalen aller benachbarten Facettenflächen 9. Durch die Facettenflächen 9 wird die Reflektorfläche 8 vollständig ausgefüllt.

Die Facettenflächen 9 sind außerdem spiegelnd, d.h. der Einfallswinkel eines einfallenden Lichtstrahls ist gleich dem Ausfallswinkel des reflektierten Lichtstrahls. Parallele Lichtstrahlen, die auf die Facettenfläche 9 treffen, werden bei einer bestimmten Facettenfläche 9 entsprechend dem Reflexionsgesetz reflektiert. Da die Normale jeder benachbarten Facettenfläche anders ausgerichtet ist, ist die Veränderung der Richtung der reflektierten Lichtstrahlen bei einem Übergang von einer Facettenfläche 9 zu einer anderen Facettenfläche 9 unstetig.

Insgesamt sind die Facettenflächen 9 auf der Reflektorfläche 8 so positioniert und ausgerichtet, dass eine erste Lichtfunktion eines Fahrzeugs bereitgestellt werden kann, wenn alle Lichtquellen 4 oder eine Teilmenge davon mit einer definierten Intensität Licht emittieren. Es wird die definierte Abstrahlcharakteristik dieser Lichtfunktion durch die Reflektion der Lichtstrahlen an den Facettenflächen 9 der Reflektorfläche 8 bereitgestellt. Des Weiteren können die Facettenflächen 9 so positioniert und ausgerichtet sein, dass eine weitere Lichtfunktion eines Fahrzeugs bereitgestellt wird, wenn die Lichtemission eines Teils der Lichtquellen 4 verändert wird im Vergleich zu der Lichtemission für die Bereitstellung der ersten Lichtfunktion. Die Veränderung der Lichtemission ist dabei insbesondere zeitlich veränderlich. Des Weiteren wird die Lichtemission so verändert, dass zumindest ein Teil der Lichtquellen 4 zumindest zeitweise eine andere Lichtintensität emittiert.

Auf diese Weise kann durch eine geeignete Steuerung der Lichtquellen 4 mittels der Steuereinheit 6 jede Lichtfunktion eines Scheinwerfers eines Fahrzeugs oder einer Heckleuchte eines Fahrzeugs bereitgestellt werden. Die erfindungsgemäße Fahrzeugleuchte wird insbesondere als Heckleuchte eingesetzt. Es können somit die Schlusslichtfunktion, die Bremslichtfunktion, die Funktion einer Nebelschlussleuchte und/oder die Funktion eines Fahrtrichtungsanzeigers bereitgestellt werden. Alternativ oder zusätzlich können auch noch weitere Signalfunktionen bereitgestellt werden.

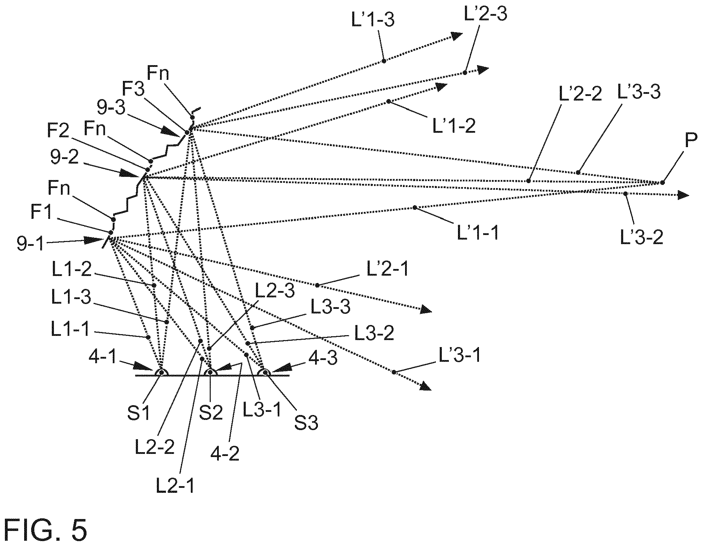

Mit Bezug zur Figur 5 wird die Geometrie der Facettenfläche 9 relativ zu den Positionen der Lichtquellen 4 im Detail erläutert:
Es werden dabei drei Lichtquellen 4-1, 4-2 und 4-3 betrachtet. Es wird darauf hingewiesen, dass die Fahrzeugleuchte 1 eine beliebige andere Anzahl an weiteren Lichtquellen 4 umfassen kann, die bei jeweils verschiedenen Positionen angeordnet sind. Die Lichtquelle 4-1 ist bei der Position S1, die Lichtquelle 4-2 bei der Position S2 und die Lichtquelle 4-3 bei der Position S3 angeordnet. Auf dem Reflektor 7 sind bei der Reflektorfläche 8 unter anderem die Facetten 9-1, 9-2 und 9-3 bei den Positionen F1, F2 und F3 angeordnet. Die Positionen F1, F2 und F3 sind beabstandet voneinander, sodass zwischen diesen Positionen weitere Facettenflächen 9 bei den allgemein mit Fn bezeichneten Positionen angeordnet sind.

Es werden nun die Lichtstrahlen untersucht, welche auf eine bestimmte Betrachtungsposition P in Lichtemissionsrichtung der Fahrzeugleuchte 1 treffen. Es wird somit untersucht, wie ein Betrachter bei der Betrachtungsposition P die Fahrzeugleuchte 1 wahrnimmt.

Die Lichtquelle 4-1 bei der Position S1 emittiert die Lichtstrahlen L1-1, L1-2 und L1-3. Der Lichtstrahl L1-1 trifft auf die Facettenfläche 9-1 bei der Position F1, der Lichtstrahl L1-2 trifft auf die Facettenfläche 9-2 bei der Position F2 und der Lichtstrahl L1-3 trifft auf die Facettenfläche 9-3 bei der Position F3. Die Facettenfläche 9-1 ist nun so ausgerichtet, dass der Lichtstrahl L1-1 so reflektiert wird, dass der reflektierte Lichtstrahl L'1-1 zur Betrachtungsposition P gelangt, sodass dieser Lichtstrahl von einem Betrachter bei der Betrachtungsposition P sichtbar ist. Eine Veränderung der Lichtintensität der Lichtquelle 4-1 nimmt somit ein Betrachter bei der Betrachtungsposition P als Veränderung der Lichtemission bei der Facettenfläche 9-1 bei der Position F1 wahr.

Die Facettenfläche 9-2 bei der Position F2 ist nun so ausgerichtet, dass der Lichtstrahl L1-2 so reflektiert wird, dass der reflektierte Lichtstrahl L'1-2 nicht auf die Betrachtungsposition P trifft. Er ist somit aus der Betrachtungsposition P auch nicht sichtbar. Gleichermaßen ist auch die Facettenfläche 9-3 bei der Position F3 so ausgerichtet, dass der Lichtstrahl L1-3 so reflektiert wird, dass der reflektierte Lichtstrahl L'1-3 nicht auf die Betrachtungsposition P trifft.

Die zweite Lichtquelle 4-2 emittiert unter anderem den Lichtstrahl L2-1 in Richtung der Position F1 der Facettenfläche 9-1, den Lichtstrahl L2-2 in Richtung der Position F2 der Facettenfläche 9-2 und den Lichtstrahl L2-3 in Richtung der Position F3 der Facettenfläche 9-3. Der Lichtstrahle L2-1 wird dabei an der Facettenfläche 9-1 so reflektiert, dass der reflektierte Lichtstrahl L'2-1 nicht zu der Betrachtungsposition P gelangt. Gleichermaßen wird der Lichtstrahl L2-3 an der Facettenfläche 9-3 so reflektiert, dass der reflektierte Lichtstrahl L'2-3 nicht zu der Betrachtungsposition P gelangt. Die Facettenfläche 9-2 bei der Position F2 ist hingegen so ausgerichtet, dass der Lichtstrahl L2-2 so reflektiert wird, dass der reflektierte Lichtstrahl L'2-2 auf die Betrachtungsposition P trifft, sodass eine Veränderung der Lichtemission der zweiten Lichtquelle 4-2 von einem Betrachter bei der Betrachtungsposition P bei der Position F3 wahrnehmbar ist.

Die dritte Lichtquelle 4-3 emittiert unter anderem die Lichtstrahlen L3-1, L3-2 und L3-3. Dabei wird der Lichtstrahl L3-1 von der Facettenfläche 9-1 so reflektiert, dass der reflektierte Lichtstrahl L'3-1 nicht auf die Betrachtungsposition P trifft. Gleichermaßen wird der Lichtstrahl L3-2 so von der Facettenfläche 9-2 so reflektiert, dass der reflektierte Lichtstrahl L'3-2 nicht auf die Betrachtungsposition P trifft. Die Facettenfläche 9-3 ist hingegen so ausgerichtet, dass der Lichtstrahl L3-3 so reflektiert wird, dass der reflektierte Lichtstrahl L'3-3 auf die Betrachtungsposition P trifft.

Des Weiteren sind zu den Facettenflächen 9-1, 9-2 und 9-3 benachbarte Facettenflächen bei den Positionen Fn so ausgerichtet, dass die von den Lichtquellen 4-1, 4-2 und 4-3 emittierten Lichtstrahlen so reflektiert werden, dass sie nicht auf die Betrachtungsposition P treffen.

Es wird darauf hingewiesen, dass die Betrachtungsposition P beliebig innerhalb eines Raumwinkels von der Lichtquelle 1 gewählt werden kann, sodass die vorstehend bestehenden Reflektionen an den Facettenflächen 9 entsprechend auch für andere Betrachtungspositionen gelten.

Werden alle Facettenflächen 9 der Reflektorfläche 8 betrachtet, so gibt es bei einem Ausführungsbeispiel mehrere, jedoch beabstandete und nicht benachbarte Facettenflächen 9, welche die von der ersten Lichtquelle 4-1 emittierten Lichtstrahlen in Richtung der Betrachtungsposition P reflektieren. Gleichermaßen gibt es mehrere beabstandete und nicht benachbarte Facettenflächen 9, die von der zweiten Lichtquelle 4-2 emittierte Lichtstrahlen zu der Betrachtungsposition P reflektieren und auch für die dritte Lichtquelle 4-3 gibt es mehrere beabstandete, jedoch nicht benachbarte Facettenflächen 9, die Lichtstrahlen dieser Lichtquelle 4-3 in Richtung der Betrachtungsposition P reflektieren. Zur Vereinfachung werden im Folgenden die Facettenflächen 9, welche Lichtstrahlen von einer bestimmten Lichtquelle 4 zu der Betrachtungsposition P reflektieren, als eine Teilmenge der Facettenflächen 9 bezeichnet, die dieser Lichtquelle 4 zugeordnet sind.

Bei weiteren Ausführungsbeispielen umfasst die Fahrzeugleuchte 1 eine größere Anzahl an Lichtquellen 4. In diesem Fall kann zu jeder weiteren Lichtquelle 4 eine weitere Teilmenge von Facettenflächen 9 gebildet sein, die entsprechende Lichtstrahlen von dieser weiteren Lichtquelle 4 zu der Betrachtungsposition P reflektieren. Die Anzahl der Teilmengen der Facettenflächen 9 entspricht somit normalerweise der Anzahl der Lichtquellen 4.

Im Folgenden wird ein Ausführungsbeispiel des erfindungsgemäßen Verfahrens erläutert, welches mittels der vorstehend beschriebenen Fahrzeugleuchte ausgeführt werden kann:
Bei dem im Folgenden beschriebenen Verfahren wird mittels der Fahrzeugleuchte 1 die Bremslichtfunktion bereitgestellt. Es wird jedoch darauf hingewiesen, dass das Verfahren entsprechend angewendet werden kann, um eine andere Lichtfunktion bereitzustellen oder eine Kombination von Lichtfunktionen zu realisieren.

In der Steuereinheit 6 ist ein Speicher 13 vorgesehen, in dem ein Muster gespeichert ist, welches eine aufeinanderfolgende Auswahl von Lichtquellen 4 bestimmt, deren Lichtemission für ein kurzes Zeitintervall verändert wird. Ferner ist in dem Speicher 13 die Länge dieses Zeitintervalls gespeichert. Des Weiteren kann ggf. die Länge eines Zwischenzeitintervalls gespeichert sein, welches zwischen zwei benachbarten Zeitintervallen liegt, bei denen die Lichtemission von verschiedenen Lichtquellen verändert wird.

Es wird im Folgenden beispielhaft angenommen, dass insgesamt 16 Lichtquellen 4 in der Fahrzeugleuchte 1 vorgesehen sind. Das Muster wählt nun eine erste Teilmenge dieser Lichtquellen 4 für ein erstes Zeitintervall aus. Für dieses Zeitintervall werden diese Lichtquellen 4 der ersten Teilmenge von einem ersten Zustand in einen zweiten Zustand versetzt. Der Einfachheit halber wird im Folgenden davon ausgegangen, dass im ersten Zustand die Lichtquellen 4 ausgeschaltet sind und im zweiten Zustand die Lichtquellen 4 eingeschaltet sind.

Für ein kurzes Zeitintervall von beispielsweise 100 ms werden die Lichtquellen 4 der ersten Teilmenge nun mittels der Steuereinheit 6 in den zweiten Zustand versetzt, d.h. eingeschaltet. Für dieses Zeitintervall sieht ein Betrachter bei der Betrachtungsposition P nun Lichtimpulse bei den Positionen der Facettenflächen 9, die den Lichtquellen 4 dieser Teilmenge so zugeordnet sind, d. h. die den Lichtquellen 4 zugeordneten Teilmengen der Facettenflächen 9. Von diesen Facettenflächen 9 werden Lichtstrahlen von den Lichtquellen 4 der ersten Teilmenge zu der Betrachtungsposition P reflektiert. Nach Ablauf des ersten Zeitintervalls werden die Lichtquellen 4 dieser ersten Teilmenge wieder in den ersten Zustand versetzt, d.h. ausgeschaltet.

Für das sich anschließende zweite Zeitintervall bestimmt das in dem Speicher 13 gespeicherte Muster der Steuereinheit 6, dass eine andere, zweite Teilmenge der Lichtquellen 4, die sich vollständig von der vorherigen Teilmenge unterscheidet, eingeschaltet wird. Für das zweite Zeitintervall sieht ein Betrachter bei der Betrachtungsposition P somit Lichtstrahlen der Teilmengen der Facettenflächen 9, die den Lichtquellen 4 zugeordnet sind, d. h. die das Licht dieser Lichtquellen 4 zu der Betrachtungsposition P reflektieren. Wie vorstehend beschrieben sind diese Facettenflächen 9 beabstandet und nicht benachbart zu den Facettenflächen 9, von welchen ein Betrachter bei der Betrachtungsposition P beim ersten Zeitintervall Lichtstrahlen gesehen hat.

Bei sich anschließenden Zeitintervallen werden wiederum weitere Teilmengen der Lichtquellen 4 mittels des in dem Speicher 13 gespeicherten Musters ausgewählt, sodass bei diesem Zeitintervall der Betrachter bei der Betrachtungsposition P jeweils sich verändernde Lichtimpulse von aufeinanderfolgend anderen Facettenflächen 9 wahrnimmt. Mittels des Musters wird somit eine Sequenz von Lichtquellen ausgewählt, deren Lichtemission aufeinanderfolgend kurzzeitig verändert, insbesondere erhöht wird. Insgesamt nimmt ein Betrachter von beliebigen Betrachtungspositionen P ein Funkeln der Lichtemission der Fahrzeugleuchte 1 wahr, und zwar ohne dass sich die relative Position der Fahrzeugleuchte 1 zu der Betrachtungsposition P ändern muss. Wenn sich allerdings die relative Position der Fahrzeugleuchte 1 zu der Betrachtungsposition verändert, wird auch ein Funkeln wahrgenommen, da dieser Funkeleffekt für beliebige Betrachtungspositionen P erzeugt wird. Dieser Funkeleffekt unterscheidet sich jedoch von einem einleitend erwähnten Glitzereffekt, der nur auftritt, wenn sich die Betrachtungsposition relativ zu der Fahrzeugleuchte 1 verändert.

Bei einem weiteren Ausführungsbeispiel ist alternativ oder zusätzlich ein Zufallsgenerator 14 in die Steuereinheit 6 integriert. In diesem Fall wird die Sequenz von Lichtquellen 4 zufällig ausgewählt, wobei die Steuereinheit 6 die vorstehend genannten Nebenbedingungen berücksichtigt. Bei aufeinanderfolgenden Zeitintervallen werden somit nicht dieselben Lichtquellen 4 ausgewählt. Die ausgewählten Teilmengen für aufeinanderfolgende Zeitintervalle unterscheiden sich somit insbesondere vollständig.

Es wird darauf hingewiesen, dass die vorstehend beschriebene Steuerung der Lichtquellen 4 mittels der Steuereinheit 6 für verschiedene Beispiele von Formen und Ausrichtungen der Reflektorfläche 8 und der Facettenflächen 9 verwendet werden kann. Gleichermaßen bilden verschiedene Gestaltungen und Geometrien der Reflektorfläche 8 und der zugehörigen Facettenflächen 9 in Verbindung mit den verschiedenen beschriebenen Steuerungen der Lichtquellen 4 weitere Ausführungsbeispiele, die unabhängig voneinander von der Erfindung umfasst sind. Dabei wird jedoch bei allen zu der Erfindung gehörigen Ausführungsbeispielen der vorstehend beschriebene Funkeleffekt bei verschiedenen Betrachtungspositionen P erzeugt.

Bei einem weiteren Ausführungsbeispiel des erfindungsgemäßen Verfahrens wird mittels der Fahrzeugleuchte 1 die Schlusslichtfunktion und die Bremslichtfunktion bereitgestellt. In diesem Fall steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen der Bremslichtfunktion wird, wie vorstehend beschrieben, eine Sequenz von Lichtquellen 4 ausgewählt, deren Lichtemission aufeinanderfolgend kurzzeitig erhöht wird. Die Bremslichtfunktion zeichnet sich somit durch eine erhöhte Lichtemission und einen Funkeleffekt aus. Die emittierte Lichtintensität einer Lichtquelle 4 kann für die Schlusslichtfunktion z. B. 10% der emittierten Lichtintensität für die Bremslichtfunktion sein.

Bei einem noch weiteren Ausführungsbeispiel des erfindungsgemäßen Verfahrens wird mittels der Fahrzeugleuchte 1 die Schlusslichtfunktion und die Funktion des Fahrtrichtungsanzeigers bereitgestellt. Wie im vorstehenden Ausführungsbeispiel steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen eines Fahrtrichtungsanzeigers wird nun eine Sequenz von neben einander angeordneten Lichtquellen 4 ausgewählt, deren Lichtemission aufeinanderfolgend kurzzeitig erhöht wird. Die Sequenz wird dabei so gewählt, dass nacheinander im Wesentlichen auf einer Linie angeordnete Lichtquellen 4 der Reihe nach ausgewählt werden, sodass ein funkelndes Lauflicht erzeugt wird, bei dem neben dem Funkeleffekt eine Steigerung der Lichtintensität entlang einer Richtung läuft. Das spezielle Muster für die Sequenz zur Auswahl der Lichtquellen 4 für die Funktion des Fahrtrichtungsanzeigers ist in dem Speicher 13 gespeichert.

Bei dem vorgenannten Ausführungsbeispiel kann nun durch geeignete Ansteuerung der Lichtquellen 12 über die Steuereinheit 17 zusätzlich zu den über die Lichtquellen 4 realisierbaren Lichtfunktionen eine weitere Lichtfunktion erzeugt werden. Zur Erreichung einer gewünschten Lichtverteilung für die weitere Lichtfunktion kann der Reflektor 7 bzw. die Reflektorfläche 8 insbesondere computerunterstützt entsprechend berechnet und gestaltet sein. Ergänzend oder alternativ ist auch denkbar, dass die Außenlichtscheibe 3 mit einer entsprechenden Streuoptik versehen ist.

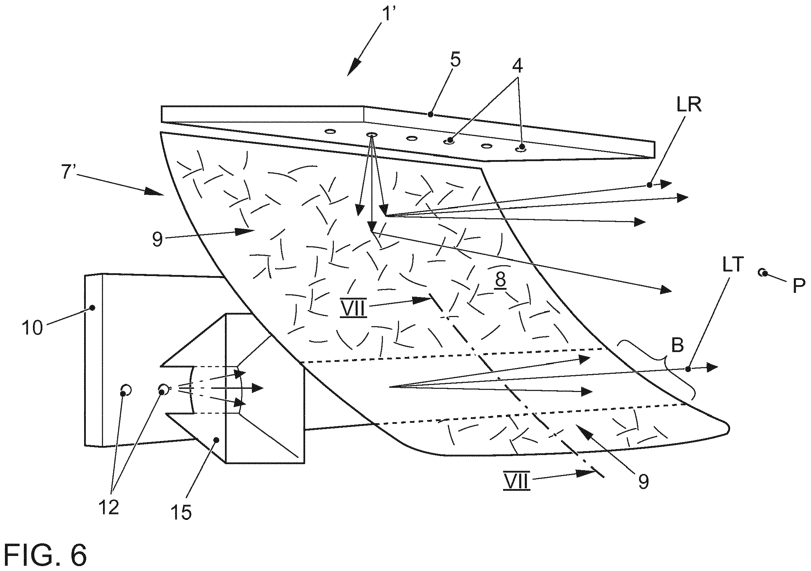

In Fig. 6 ist ein weiteres Ausführungsbeispiel (1') für eine erfindungsgemäße Fahrzeugleuchte beschrieben. Es sind nur die für das Verständnis der Erfindung wesentlichen Bauteile dargestellt. Im Unterschied zu dem vorhergehenden Ausführungsbeispiel sind hierbei die Lichtquellen 4 oberhalb eines Reflektors 7' angeordnet. Ferner weist der Reflektor 7' bzw, seine Reflektorfläche 8 einen streifenartigen Bereich B ohne Facettenflächen 9 auf, der in Lichtabstrahlrichtung der Lichtquellen 12 gesehen, vor den Lichtquellen 12 angeordnet ist. Der Bereich B ist im Ausführungsbeispiel ohne jegliche Optik ausgebildet, insbesondere weist die Reflektorfläche 8 dort eine glatte Oberfläche auf. Der Bereich B kann auch einen anderen Umriss aufweisen, beispielsweise rund sein. Es können auch mehrere solcher Bereiche vor den Lichtquellen 12 angeordnet sein. Es ist auch denkbar, dass der Bereich B eine andere Optik aufweist, die von der beschriebenen Facettenoptik abweicht.

Zusätzlich kann ein lichtlenkendes Bauteil 15 vorhanden sein, welches einer oder auch mehreren Lichtquellen 12 zugeordnet sein kann. Bei Zuordnung nur zu einer Lichtquelle 12 ist die Anzahl der Bauteile 15 entsprechend der Anzahl der Lichtquellen 12 auszuwählen. Das Bauteil 15 ist zwischen dem Reflektor 7', insbesondere zwischen dem Bereich B und den Lichtquellen 12 positioniert. Das lichtlenkende Bauteil 15 ist derart ausgestaltet, dass es von den Lichtquellen 12 emittierte Lichtstrahlen weitmöglichst auffängt und in Richtung auf den Reflektor 7' lenkt. Im Ausführungsbeispiel ist das lichtlenkende Bauteil 15 eine Kollimatoroptik.
Mit P ist wiederum eine Betrachtungsposition eines Betrachters beziffert. Aus der Betrachtungsposition P können einerseits durch den Reflektor 7' reflektierte Lichtstrahlen LR der Lichtquellen 4 mit dem beschriebenen Funkeln wahrgenommen werden, andrerseits werden durch den Reflektor 7' hindurchgelassene Lichtstrahlen LT der Lichtquellen 12 wahrgenommen.

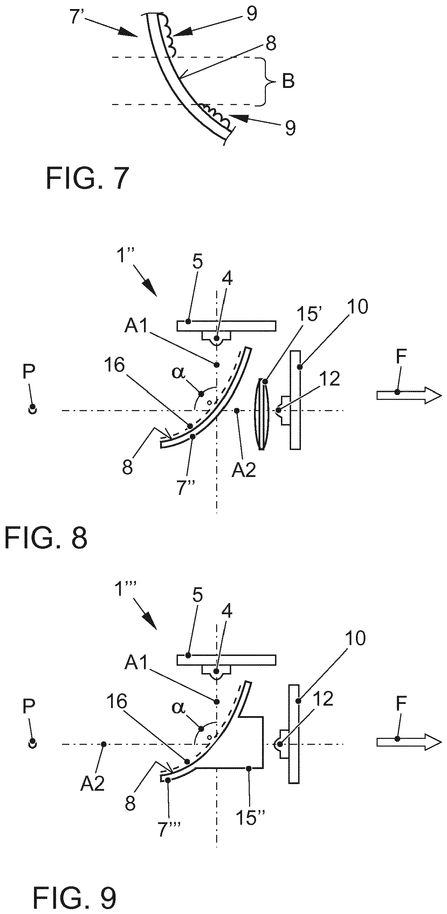

Anhand von Fig. 7 wird der Bereich B nochmals verdeutlicht, in dem der Reflektor 7' frei von den Facettenflächen 9 und ohne eine gesonderte Optik ist.

Schließlich sind in den Figuren 8 und 9 noch zwei weitere Ausführungsbeispiele (1", 1"') für eine erfindungsgemäße Fahrzeugleuchte dargestellt, wobei auch hier der Einfachheit halber ein Leuchtengehäuse und eine Außenlichtscheibe nicht gezeichnet sind.

Im Unterschied zum vorhergehenden Ausführungsbeispiel ist in Fig. 8 ein Reflektor 7", insbesondere auf seiner der Betrachtungsposition P zugewandten Reflektorfläche 8 mit einer dünnen Metallschicht 16 versehen. Deren Dicke ist so bemessen, dass von den Lichtquellen 12 emittierte Lichtstrahlen die Metallschicht 16 ungehindert passieren können. Aus der Betrachtungsposition P auf den Reflektor 7" fallende Lichtstrahlen werden jedoch reflektiert, so dass eine hochwertige Chrom-Anmutung entsteht. Des Weiteren ist ein lichtlenkendes Bauteil 15' zwischen den Lichtquellen 12 und dem Reflektor 7" angeordnet, welches als Sammellinse ausgebildet ist.

Bei der Fig. 9 ist im Unterschied zu den anderen Figuren ein lichtlenkendes Bauteil 15" einteilig, also stoffschlüssig mit einem Reflektor 7'" verbunden. Der Reflektor 7"' und das Bauteil 15" können im Spritzgussverfahren, unter Umständen auch in einem Zweikomponenten-Spritzgussverfahren hergestellt sein. Hierdurch können der Reflektor 7'" und das Bauteil 15" unterschiedliche Materialien aufweisen, was eine bedarfsgerechtere Materialauswahl ermöglicht. Das lichtlenkende Bauteil 15" ist eine Kollimatoroptik, durch welche die von den Lichtquellen 12 emittierten Lichtstrahlen gesammelt und in Richtung des Reflektors 7"' gleichgerichtet werden.

Ferner ist der Reflektor 7"', insbesondere auf seiner der Betrachtungsposition P zugewandten Reflektorfläche 8 mit einer Interferenzbeschichtung 18 versehen. Diese Beschichtung kann so ausbildet sein, dass lediglich Lichtstrahlen einer bestimmten Wellenlänge durchgelassen werden. Im Ausführungsbeispiel lässt die Interferenzbeschichtung 18 nur Lichtstrahlen mit einer Wellenlänge von etwa 560 nm bis 600 nm hindurch, also Lichtstrahlen der Farbe gelb. Die Lichtquellen 12 emittieren gelbes Licht zur Realisierung der Lichtfunktion eines Fahrtrichtungsanzeigers. So werden nur Lichtstrahlen dieser Farbe, welche in das lichtlenkende Bauteil 15" gelangen auch wirklich durch die Interferenzbeschichtung 18 hindurchgelassen. Dies führt zu einer sauberen Trennung der Lichtfunktion des Fahrtrichtungsanzeigers mit einer anderen, durch die Lichtquellen 4 bereitgestellten Lichtfunktion.

Auch in den Figuren 8 und 9 ist nochmals hervorgehoben, dass die Ausrichtungen A1 und A2 der Lichtquellen 4 und 12 in einem Winkel α in etwa senkrecht, vorzugsweise senkrecht zueinander stehen. Dies begünstigt einen kompakten Aufbau der Fahrzeugleuchte.

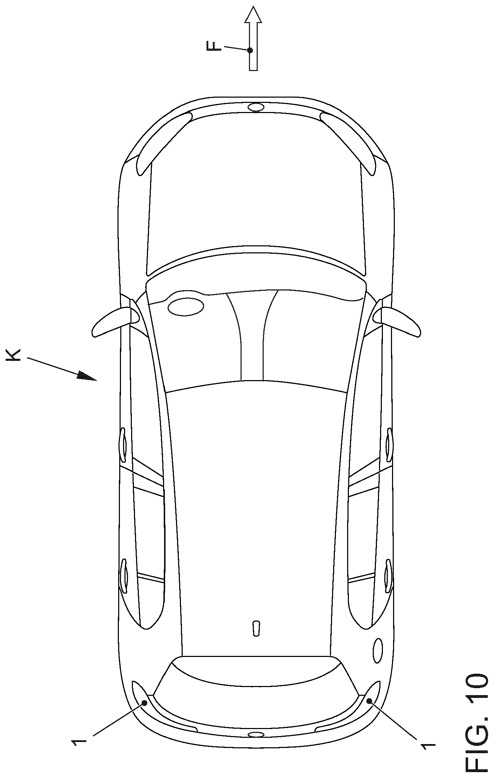

Schließlich zeigt die Fig. 10 ein Kraftfahrzeug K, welches mit zwei erfindungsgemäßen Fahrzeugleuchten 1 ausgestattet ist. Die Fahrzeugleuchten 1 sind im Ausführungsbeispiel als Heckleuchten ausgebildet. Sie können aber alternativ oder zusätzlich auch als Scheinwerfer des Kraftfahrzeugs K ausgebildet sein.

### Bezugszeichenliste

- 1, 1', 1", 1'": Fahrzeugleuchte
- 2: Gehäuse
- 3: Außenlichtscheibe
- 4, 4-1, 4-2, 4-3: Lichtquellen
- 5: Platine
- 6: Steuereinheit
- 7, 7' ,7" ,7'": Reflektor; Optikelement
- 8: Reflektorfläche
- 9, 9-1, 9-2, 9-3: Facettenflächen
- 10: Platine
- 11: Segmente
- 12: Lichtquellen
- 13: Speicher
- 14: Zufallsgenerator
- 15, 15', 15": lichtlenkendes Bauteil
- 16: Metallschicht
- 17: Steuereinheit
- 18: Interferenzbeschichtung

- A: Richtung
- B: Flächenbereich ohne Facettenflächen
- F: Fahrtrichtung
- K: Kraftfahrzeug
- P: Betrachtungsposition
- I: parabolische Linie
- S1, S2, S3: Positionen der Lichtquellen
- F1, F2, F3, Fn: Positionen der Facettenflächen
- L1-1, L1-2, L1-3, L2-1, L2-2, L2-3, L3-1, L3-2, L3-3: Lichtstrahlen
- L'1-1, L'1-2, L'1-3, L'2-1, L'2-2, L'2-3, L'3-1, L'3-2, L'3-3: reflektierte Lichtstrahlen
- LF1: Lichtfunktion
- LF2: Lichtfunktion
- LR: reflektierte Lichtstrahlen
- LT: durchgelassene Lichtstrahlen
- α: Winkel

## Patentansprüche

1. Fahrzeugleuchte (1, 1', 1", 1'") mit wenigstens einem Optikelement (7), welches eine Vielzahl von Facettenflächen (9) umfasst, wobei die Richtungen von Lichtstrahlen (L1-1, L1-2, L1-3, L2-1, L2-2, L2-3, L3-1, L3-2, L3-3), welche in Richtung des Optikelementes (7) emittierbar sind, durch die Facettenflächen (9, 9-1, 9-2, 9-3) veränderbar sind, **dadurch gekennzeichnet, dass** dem Optikelement (7, 7', 7", 7"') mehrere Lichtquellen (4, 4-1, 4-2, 4-3) zugeordnet sind, wobei die Lichtquellen (4, 4-1, 4-2, 4-3) derart ansteuerbar und relativ zu den Positionen und/oder Ausrichtungen der Facettenflächen (9, 9-1, 9-2, 9-3) angeordnet sind, dass von den Lichtquellen (4, 4-1, 4-2, 4-3) emittierte Lichtstrahlen (L1-1, L1-2, L1-3, L2-1, L2-2, L2-3, L3-1, L3-2, L3-3) am Optikelement (7, 7', 7", 7"') reflektiert werden und in einer bestimmten Betrachtungsposition (P) wenigstens eine Lichtfunktion (LF1) mit einem wahrnehmbaren Funkeln erzeugbar ist, dass das Optikelement (7, 7', 7", 7'") transparent ausgebildet ist und wenigstens eine weitere Lichtquelle (12) auf einer der Betrachtungsposition (P) abgewandten Seite des Optikelementes (7, 7', 7", 7"') vorhanden ist, durch welche durch das Optikelement (7, 7', 7", 7"') in Richtung der Betrachtungsposition (P) hindurchtretende Lichtstrahlen (LT) zur Realisierung wenigstens einer zweiten Lichtfunktion (LF2) emittierbar sind.

2. Fahrzeugleuchte (1) nach Anspruch 1, **dadurch gekennzeichnet, dass** die Lichtquellen (4, 4-1, 4-2, 4-3), deren Lichtstrahlen (L1-1, L1-2, L1-3, L2-1, L2-2, L2-3, L3-1, L3-2, L3-3) am Optikelement (7, 7', 7", 7"') reflektiert werden, eine erste Ausrichtung (A1) und die wenigstens eine weitere Lichtquelle (12), deren Lichtstrahlen durch das Optikelement (7, 7', 7", 7"') hindurchtreten, eine zweite Ausrichtung (A2) aufweisen, wobei die erste Ausrichtung (A1) in etwa senkrecht zur zweiten Ausrichtung (A2) ausgerichtet ist.

3. Fahrzeugleuchte (1') nach Anspruch 2, **dadurch gekennzeichnet, dass** die Lichtquellen (4), deren Lichtstrahlen am Optikelement (7') reflektiert werden, oberhalb des Optikelementes (7') angeordnet sind.

4. Fahrzeugleuchte (1) nach einem der vorhergehenden Ansprüche, **dadurch gekennzeichnet, dass** das Optikelement (7, 7', 7", 7"') ein zusammenhängender Reflektor (7, 7', 7", 7"') mit einer Reflektorfläche (8) ist, auf der die Facettenflächen (9) angeordnet sind.

5. Fahrzeugleuchte (1) nach einem der vorhergehenden Ansprüche, **dadurch gekennzeichnet, dass**, dass ein Querschnitt des Reflektors (7, 7', 7", 7"') eine von der Reflektorfläche (8) gebildete parabolische Linie (I) umfasst und dass die Reflektorfläche (8) durch ein Verschieben der parabolischen Linie (I) auf einer Geraden (A) gebildet ist.

6. Fahrzeugleuchte (1' ,1") nach Anspruch 4 oder 5, **dadurch gekennzeichnet, dass** die Reflektorfläche (8) wenigstens einen Flächenbereich (B) aufweist, in denen keine Facettenflächen (9) vorhanden sind.

7. Fahrzeugleuchte (1', 1", 1"') nach einem der Ansprüche 4 bis 6, **dadurch gekennzeichnet, dass** zwischen der wenigstens einen weiteren Lichtquelle (12) und dem Reflektor (7', 7", 7"') wenigstens ein weiteres, lichtlenkendes Bauteil (15, 15', 15") angeordnet ist, derart, dass von der wenigstens einen weiteren Lichtquelle (12) emittierte Lichtstrahlen vor Durchdringen des Reflektors (7', 7", 7"') durch das lichtlenkende Bauteil (15,15',15") gelangen können.

8. Fahrzeugleuchte (1"') nach Anspruch 7, **dadurch gekennzeichnet, dass** das wenigstens eine weitere, lichtlenkende Bauteil (15") einteilig mit dem Reflektor (7'") verbunden ist.

9. Fahrzeugleuchte (1") nach einem der vorhergehenden Ansprüche 4 bis 8, **dadurch gekennzeichnet, dass** auf die Reflektorfläche (8) zumindest bereichsweise eine Metallschicht (16) aufgebracht ist, die in der Dicke derart bemessen ist, dass Lichtstrahlen der wenigstens einen weiteren Lichtquelle (12) die Metallschicht (16) durchdringen können.

10. Fahrzeugleuchte (1'") nach einem der vorhergehenden Ansprüche 4 bis 9, **dadurch gekennzeichnet, dass** auf die Reflektorfläche (8) zumindest bereichsweise eine solche Beschichtung (18) aufgebracht ist, die lediglich Lichtstrahlen einer bestimmten Wellenlänge durchlässt.

11. Kraftfahrzeug (K) mit wenigstens einer Fahrzeugleuchte (1) nach einem der Ansprüche 1 bis 10.

12. Verfahren zum Bereitstellen wenigstens einer Lichtfunktion (LF1) mit einem wahrnehmbaren Funkeln mittels einer Fahrzeugleuchte (1, 1', 1", 1"'), die zumindest drei bei verschiedenen Positionen angeordnete Lichtquellen (4) und einen transparenten Reflektor (7, 7', 7", 7"') aufweist, der eine Vielzahl von Facettenflächen (9) umfasst, wobei die Richtungen von Lichtstrahlen, die von den Lichtquellen (4) emittiert wurden und die auf die Facettenflächen (9) treffen, durch die Facettenflächen (9) verändert werden, wobei eine Sequenz von Lichtquellen (4) ausgewählt wird, deren Lichtemission aufeinanderfolgend kurzzeitig verändert wird und die Lichtemission der Lichtquellen (4) sequenziell so verändert wird, dass von einer bestimmten, von der Fahrzeugleuchte (1, 1', 1", 1'") entfernten Betrachtungsposition (P) aus zumindest zunächst ein von einer ersten Lichtquelle (4-1) emittierter Lichtstrahl (L1-1), dessen Richtung von einer ersten Facettenfläche (9-1) bei einer ersten Facettenposition (F1) verändert wurde, kurzzeitig sichtbar ist, danach ein von einer zweiten Lichtquelle (4-2) emittierter Lichtstrahl (L2-2), dessen Richtung von einer zweiten Facettenfläche (9-2) bei einer zweiten Facettenposition (F2) verändert wurde, kurzzeitig sichtbar ist und anschließend ein von einer dritten Lichtquelle (4-3) emittierter Lichtstrahl (L3-3), dessen Richtung von einer dritten Facettenfläche (9-3) bei einer dritten Facettenposition (F3) verändert wurde, kurzzeitig sichtbar ist, wobei die erste, zweite und dritte Facettenposition (F1, F2, F3) jeweils beabstandet voneinander angeordnet sind und wobei der Lichtfunktion (LF1) wenigstens eine weitere Lichtfunktion (LF2) überlagert wird, indem wenigstens eine weitere Lichtquelle (12) angesteuert wird, welche an der der Betrachtungsposition (P) abgewandten Seite des transparenten Reflektors (7, 7', 7", 7"') angeordnet ist. so dass von dieser Lichtquelle (12) emittierte Lichtstrahlen durch den transparenten Reflektor (7, 7', 7", 7"') gelangen und diesen auf der der Betrachtungsposition (P) zugewandten Seite des Reflektors (7, 7', 7", 7"') in Richtung der Betrachtungsposition (P) wieder verlassen.

13. Verfahren nach Anspruch 12, **dadurch gekennzeichnet, dass** die Sequenz von Lichtquellen (4) zufällig ausgewählt wird.

## Claims

1. Vehicle lamp (1, 1', 1", 1"') comprising at least one optical element (7) comprising a plurality of facet faces (9), wherein the directions of the light beams (L1-1, L1-2, L1-3, L2-1, L2-2, L2-3, L3-1, L3-2, L3-3) emitted in the direction of the optical element (7) through the facet faces (9, 9-1, 9-2, 9-3), may be modified, **characterized in that** the optical elements (7, 7', 7", 7"') are associated with a plurality of light sources (4, 4-1, 4-2, 4-3), and wherein the light sources (4, 4-1, 4-2, 4-3) are so controlled and so arranged relative to the positions and/or orientations of the facet faces (9, 9-1, 9-2, 9-3), that the light beams (L1-1, L1-2, L1-3, L2-1, L2-2, L2-3, L3-1, L3-2, L3-3) emitted by the light sources (4, 4-1, 4-2, 4-3) are reflected from the optical elements (7, 7', 7", 7'"), wherein at least one light function (LF1) with a perceptible sparkle may be generated in a certain viewing position (P), wherein the optical elements (7, 7', 7", 7"') are transparent, and wherein at least one further light source (12) is provided on one side of the optical element (7, 7', 7", 7"') facing away from the viewing position (P) and through which light beams (LT) for the production of at least one second light function (LF2) pass in the direction of the viewing position (P), may be emitted by the optical elements (7, 7', 7", 7"').

2. Vehicle lamp (1) according to claim 1, **characterized in that** the light sources (4, 4-1, 4-2, 4-3) whose light beams (L1-1, L1-2, L1-3, L2-1, L2-2, L2-3, L3-1, L3-2, L3-3) are reflected at the optical elements (7, 7', 7", 7"') in a first orientation (A1), while the at least one further light source (12), whose light beams pass through the optical elements (7, 7', 7", 7"'), has a second orientation (A2), wherein the first orientation (A1) is approximately perpendicular to the second orientation (A2).

3. Vehicle lamp (1') according to claim 2, **characterized in that** the light sources (4) whose light beams are reflected on the optical element (7') are arranged above the optical element (7').

4. Vehicle lamp (1) according to any one of the preceding claims, **characterized in that** the optical elements (7, 7', 7", 7"') form a continuous reflector (7, 7', 7", 7"') with a reflector surface (8) on which the facet faces (9) are arranged.

5. Vehicle lamp (1) according to any one of the preceding claims, **characterized in that** a cross-section of the reflectors (7, 7', 7", 7"') comprises a parabolic line (I) formed by the reflector surface (8), while the reflector surface (8) is formed by displacing the parabolic line (I) on a straight line (A).

6. Vehicle lamp (1', 1") according to claim 4 or 5, **characterized in that** the reflector surface (8) has at least one surface area (B), in which no facet faces (9) are present.

7. Vehicle lamp (1', 1', 1"') according to any one of the claims 4 to 6, **characterized in that** at least one further light-directing component (15, 15", 15"') is so arranged between the at least one further light source (12) and the reflector (7', 7", 7"') that light beams emitted by the at least one further light source (12) reach the reflector (7', 7", 7"') through the light-directing component (15, 15", 15"').

8. Vehicle lamp (1"') according to claim 7, **characterized in that** the at least one further light-directing component (15") is integrally connected to the reflector (7"').

9. Vehicle lamp (1") according to one of the preceding claims 4 to 8, **characterized in that** a metal layer (16) is applied at least partially to the reflector surface (8), wherein the layer is so dimensioned in thickness that light beams of at least one further light source (12) can reach the metal layer (16).

10. Vehicle lamp (1"') according to any one of the preceding claims 4 to 9, **characterized in that** such a coating (18) is applied at least partially to the reflector surface (8), wherein the latter only allows light beams of a certain wavelength to pass.

11. Motor vehicle (K) with at least one vehicle lamp (1) according to one of the claims 1 to 10.

12. Method for providing at least one light function (LF1) with perceptible sparkle by means of a vehicle lamp (1, 1', 1", 1"') comprising at least three light sources (4) arranged at different positions, and a transparent reflector (7, 7', 7", 7"') comprising a plurality of facet faces (9), wherein the directions of light beams emitted by the light sources (4) and striking the facet faces (9) are modified on the facet faces (9), wherein a sequence of light sources (4) is selected whose light emission is briefly and successively modified, while the light emission from the light sources (4) is so sequentially modified, that at a certain remote distance from the vehicle lamp (1, 1', 1", 1"') at least one light beam (L1-1) that was initially emitted from a first light source (4-1), and whose direction from a first facet face (9-1) at a first facet position (F1) is modified, becomes briefly visible from a viewing position (P), then a light beam (L2-2) emitted by a second light source (42) whose direction is modified by a second facet face (9-2) at a second facet position (F2) becomes briefly visible, and then a light beam (L3-3) emitted by a third light source (4-3) whose direction is modified by a third facet face (9-3) at a third facet position (F3) becomes briefly visible, wherein the first, second, and third facet positions (F1, F2, F3) are each arranged at a distance from one another, and wherein the light function (LF1) is superimposed on at least one further light function (LF2) by controlling at least one further light source (12) which is so arranged at the transparent reflector (7, 7', 7", 7"') facing away from the side of the viewing position (P) that light beams emitted by this light source (12) pass through the transparent reflector (7, 7', 7", 7"') and leave this again in the direction of the viewing position (P) on the side of the reflector (7, 7', 7", 7"') facing the viewing position (P).

13. Method according to claim 12, **characterized in that** the sequence of light sources (4) is selected at random.

## Revendications

1. Feu de véhicule (1, 1', 1", 1'") avec au moins un élément optique (7), qui comprend une pluralité de surfaces à facettes (9), les directions des rayons lumineux (L1-1, L1-2, L1-3, L2-1, L2-2, L2-3, L3-1, L3-2, L3-3), qui peuvent être émis en direction de l'élément optique (7), pouvant être modifiées à l'aide des surfaces à facettes (9, 9-1, 9-2, 9-3), **caractérisé en ce que**, à l'élément optique (7, 7', 7", 7'") correspondent plusieurs sources de lumière (4, 4-1, 4-2, 4-3), les sources de lumières (4, 4-1, 4-2, 4-3) pouvant être contrôlées et étant disposées par rapport aux positions et/ou aux orientations des surfaces à facettes (9, 9-1, 9-2, 9-3), de façon à ce que les rayons lumineux (L1-1, L1-2, L1-3, L2-1, L2-2, L2-3, L3-1, L3-2, L3-3) émis par les sources de lumières (4, 4-1, 4-2, 4-3) soient réfléchis au niveau de l'élément optique (7, 7', 7", 7'") et à ce qu'au moins une fonction lumineuse (LF1) avec un scintillement perceptible puisse être générée dans une position d'observation (P) déterminée, **en ce que** l'élément optique (7, 7', 7", 7"') est conçu de façon à être transparent et au moins une source de lumière supplémentaire (12) est présente sur un côté de l'élément optique (7, 7', 7", 7'") opposé à la position d'observation (P), à l'aide de laquelle des rayons lumineux (LT) traversant l'élément optique (7, 7', 7", 7'") en direction de la position d'observation (P) peuvent être émis pour la réalisation d'une deuxième fonction lumineuse (LF2).

2. Feu de véhicule (1) selon la revendication 1, **caractérisé en ce que** les sources de lumières (4, 4-1, 4-2, 4-3), dont les rayons lumineux (L1-1, L1-2, L1-3, L2-1, L2-2, L2-3, L3-1, L3-2, L3-3) sont réfléchis au niveau de l'élément optique (7, 7', 7", 7'"), présentent une première orientation (A1) et l'au moins une source de lumière supplémentaire (12), dont les rayons lumineux traversent l'élément optique (7, 7', 7", 7"'), présentent une deuxième orientation (A2), la première orientation (A1) étant orientée de manière approximativement perpendiculaire à la deuxième orientation (A2).

3. Feu de véhicule (1) selon la revendication 2, **caractérisé en ce que** les sources de lumières (4) dont les rayons lumineux sont réfléchis au niveau de l'élément optique (7') sont disposées au-dessus de l'élément optique (7').

4. Feu de véhicule (1) selon l'une des revendications précédentes, **caractérisé en ce que** l'élément optique (7, 7', 7", 7"') est un réflecteur cohérent (7, 7', 7", 7'") avec une surface de réflecteur (8), sur laquelle sont disposées les surfaces à facettes (9).

5. Feu de véhicule (1) selon l'une des revendications précédentes, **caractérisé en ce qu'**une section transversale du réflecteur (7, 7', 7", 7'") comprend une ligne parabolique (I) constituée de la surface du réflecteur (8) et **en ce que** la surface du réflecteur (8) est formée par un déplacement de la ligne parabolique (I) sur une droite (A).

6. Feu de véhicule (1', 1") selon la revendication 4 ou 5, **caractérisé en ce que** la surface du réflecteur (8) comprend au moins une partie de surface (B) dans laquelle aucune surface à facettes (9) n'est présente.

7. Feu de véhicule (1', 1", 1"') selon l'une des revendications 4 à 6, **caractérisé en ce que**, entre l'au moins une source de lumière supplémentaire (12) et le réflecteur (7', 7", 7'"), est disposé au moins un composant supplémentaire de guidage de la lumière (15, 15', 15") de façon à ce que les rayons lumineux émis par l'au moins une source de lumière supplémentaire (12) puissent traverser le composant supplémentaire de guidage de la lumière (15, 15', 15") avant de traverse le réflecteur (7', 7", 7'").

8. Feu de véhicule (1'") selon la revendication 7, **caractérisé en ce que** l'au moins un composant supplémentaire de guidage de la lumière (15") est relié d'une seule pièce avec le réflecteur (7'").

9. Feu de véhicule (1") selon l'une des revendications précédentes 4 à 8, **caractérisé en ce que**, sur la surface du réflecteur (8) est appliquée, au moins à certains endroits, une couche métallique (16) dont l'épaisseur est telle que les rayons lumineux de l'au moins une source de lumière supplémentaire (12) puissent traverser la couche métallique (16).

10. Feu de véhicule (1'") selon l'une des revendications précédentes 4 à 9, **caractérisé en ce que**, sur la surface du réflecteur (8), est appliquée, au moins à certains endroits, un revêtement (18) qui laisse passer uniquement les rayons lumineux d'une longueur d'onde déterminée.

11. Véhicule à moteur (K) avec au moins un feu de véhicule (1) selon l'une des revendications 1 à 10.

12. Procédé de réalisation d'au moins une fonction lumineuse (LF1) avec un scintillement perceptible au moyen d'un feu de véhicule (1, 1', 1", 1'"), qui comprend au moins trois sources de lumière (4) disposées à des positions différentes et un réflecteur transparent (7, 7', 7", 7"'), qui comprend une pluralité de surfaces à facettes (9), les directions des rayons lumineux qui ont été émis par les sources de lumières (4) et qui arrivent sur les surfaces à facettes (9), étant modifiées par les surfaces à facettes (9), une séquence de sources de lumière (4) étant sélectionnée, dont l'émission de lumière est modifiée brièvement successivement et l'émission de lumière des sources de lumière (4) est modifiée de manière séquentielle de façon à ce que, à partir de la position d'observation (P) éloignée du feu de véhicule (1, 1', 1", 1'"), un rayon lumineux (L1-1) émis à partir d'une première source de lumière (4-1), dont la direction a été modifiée par une première surface à facette (9-1) à une première position de facette (F1), soit d'abord brièvement visible, ensuite un rayon lumineux (L2-2) émis par une deuxième source de lumière (4-2), dont la direction a été modifiée par une deuxième surface à facette (9-2) à une deuxième position de facette (F2), soit brièvement visible, puis un rayon lumineux (L3-3) émis par une troisième source de lumière (4-3), dont la direction a été modifiée par une troisième surface à facette (9-3) à une troisième position de facette (F3), soit brièvement visible, les première, deuxième et troisième positions de facettes (F1, F2, F3) étant disposées de manière éloignée entre elles et, à la fonction lumineuse (LF1), est superposée au moins une fonction lumineuse supplémentaire (LF2) grâce au fait qu'une source de lumière supplémentaire (12) soit contrôlée, qui est disposée sur le côté du réflecteur transparent (7, 7', 7", 7'") opposé à la position d'observation (P), de façon à ce que les rayons lumineux émis par cette source de lumière (12) traversent le réflecteur transparent (7, 7', 7", 7"') et quittent à nouveau celui-ci, du côté du réflecteur (7, 7', 7", 7'") orienté vers la position d'observation (P), en direction de la position d'observation (P).

13. Procédé selon la revendication 12, **caractérisé en ce que** la séquence de sources de lumière (4) est sélectionnée de manière aléatoire.
